# EUROPÄISCHE PATENTSCHRIFT

(11) **EP 4 220 506 B1**
(45) Veröffentlichungstag und Bekanntmachung des Hinweises auf die Patenterteilung: **18.09.2024**
(21) Anmeldenummer: 23169684.0
(22) Anmeldetag: 30.10.2013
(51) Int. Cl.: G06Q 10/06, G01N 29/04, G01N 29/12

(54) **ANORDNUNG UND VERFAHREN ZUR INSPEKTION EINES OBJEKTS, INSBESONDERE EINES BAUWERKS**
ARRANGEMENT AND METHOD FOR INSPECTING AN OBJECT, IN PARTICULAR A STRUCTURE
DISPOSITIF ET PROCÉDÉ D'INSPECTION D'UN OBJET, EN PARTICULIER D'UNE CONSTRUCTION

(43) Veröffentlichungstag der Anmeldung: 02.08.2023
(62) Teilanmeldung aus: 13789229.5
(73) Patentinhaber: Screening Eagle Dreamlab Pte. Ltd., Singapore 138632 (SG)
(72) Erfinder: Poser, Marcel, 9242 Oberuzwil (CH); Lim, Malcolm, Buffalo Grove,, IL 60089-3503 (US)
(74) Vertreter: Hepp Wenger Ryffel AG

(56) Entgegenhaltungen:
- WO-A1-00/73739
- WO-A1-94/01766
- US-A1- 2009 010 484
- US-A1- 2013 061 696
- A HAMMAD ET AL: "AUGMENTED REALITY INTERACTION MODEL FOR MOBILE INFRASTRUCTURE MANAGEMENT SYSTEMS", PROCEEDINGS OF 1ST CSCE SPECIALTY CONFERENCE ON INFRASTRUCTURE TECHNOLOGIES, MANAGEMENT AND POLICY, 1 June 2005 (2005-06-01), XP055119164, Retrieved from the Internet <URL:http://users.encs.concordia.ca/~hammad/papers/C33.pdf> [retrieved on 20140521]

## Beschreibung

Die Erfindung betrifft eine Anordnung sowie ein Verfahren zur Inspektion eines Objekts, insbesondere eines Bauwerks, gemäss den Oberbegriffen der unabhängigen Ansprüche.

Bauwerke erfordern regelmässige und detaillierte Inspektionen durch qualifizierte Inspektions-Fachleute, um einen Zustand des Bauwerks zu erfassen. Dies gilt entsprechend auch für viele andere Objekte. Die Inspektionen können Aufschluss darüber geben, ob z.B. die strukturelle Integrität des Objekts gewährleistet ist. Bauwerke - insbesondere Gebäude, Lagerstätten, Brücken, Türme, Tunnels, Strassen und Schutzeinrichtungen - müssen zur Sicherstellung einer ausreichenden Gebrauchstauglichkeit und Tragsicherheit regelmässig überprüft werden. Die Überprüfung erfolgt bei der Erstellung, während der Nutzung, einer Umnutzung und einem allfälligen Rückbau der Bauwerke.

Derartige Inspektionen erfordern mitunter die Berücksichtigung einer Vielzahl von Daten und Parametern. Beispielsweise sind bei der Inspektion von Bauwerken Materialcharakteristiken von Bauelementen, Betriebsparameter, Vorschriften und Empfehlungen aus allfälligen Normen und Richtlinien sowie z.B. besondere Anforderungen an ein Bauelement im Kontext des gesamten Bauwerks zu berücksichtigen. Es ist daher ein Bedürfnis, ein Inspektionssystem zu schaffen, welches eine möglichst hohe Integration einer Vielzahl von Daten ermöglicht und diese dem Inspektions-Fachmann übersichtlich zur Verfügung stellt.

Typischerweise umfassen die Inspektionen eines Bauwerks eine umfassende Sichtung des Bauwerks, bei welcher inspektionsrelevante Situationen wie z.B. Defekte und/oder Störungen des Bauwerks bzw. einzelner Bauelemente visuell identifiziert und erfasst werden. Im Folgenden wird ohne Einschränkung der Allgemeinheit für inspektionsrelevante Situationen exemplarisch auf Defekte verwiesen. Ein Inspektions-Fachmann analysiert in einem weiteren Schritt diese Defekte und leitet auf deren Basis eine Diagnose z.B. einer Art des Defekts oder einer Topologie des Defekts her. Aufgrund der Diagnose wird z.B. über weitere Inspektionsschritte und/oder Massnahmen zur Beseitigung der Defekte entschieden. Dies birgt das Risiko, dass Defekte sowie deren allfällige Auswirkungen auf das Bauwerk vom Inspektions-Fachmann übersehen und/oder falsch eingeschätzt werden.

Die Registrierung der Defekte umfasst meist das Eintragen der Defekte auf einem Diagramm wie z.B. einem Bauplan eines Bauwerks während der Inspektion durch den Inspektions-Fachmann. In der Folge werden die registrierten Defekte in der Regel elektronisch erfasst und z.B. in eine Datenbank eingetragen oder in einen CAD-basierten Bauplan des Bauwerks oder einem beispielsweise mit Hilfe eines an sich bekannten 3D-Scanners erstellten Modell des Bauwerks aufgenommen. Dieses Vorgehen hat zum einen den Nachteil, dass die Erfassung der Defekte einzig von der Wahrnehmung und Sorgfalt des Inspektions-Fachmanns abhängt. Die Erfassung der Defekte bildet jedoch die Grundlage für sämtliche weiteren Massnahmen und sollte daher eine erhöhte Redundanz aufweisen, mit welcher sich z.B. die Gefahr fehlerhafter Eintragungen oder unentdeckter Defekte vermindern lässt. Zum anderen birgt die Übertragung der diagrammatisch erfassen Defekte in eine elektronische Datenerfassung das Risiko von Übertragungsfehlern z.B. durch eine fehlerhafte Eingabe von Zahlenwerten. Zudem ist auf diese Weise im Nachhinein nicht nachvollziehbar, an welcher Stelle der Inspektion ein Fehler aufgetreten ist. Des Weiteren ist die mehrfache Übertragung von Daten ineffizient und arbeitsintensiv. Beispielsweise lässt sich nicht nachvollziehen, ob ein Defekt vom Inspektions-Fachmann überhaupt erfasst wurde oder z.B. erst zu einem späteren Zeitpunkt z.B. bei der Übertragung der Daten verloren gegangen ist. Die US 2009/010484 zeigt eine Vorrichtung zur Inspektion eines Objektes mit einer mobilen Messeinheit. A. Hamad et al. zeigt in «Augmented Reality Interaction Model for Mobile Infrastructure Management Systems" die Bereitstellung von virtuellen Modellen.

Ein integriertes System, welches zumindest einige der bestehenden Nachteile zu beheben versucht, ist in der US 6,725,097 B1 beschrieben. Dieses System erlaubt die Eingabe von visuell erkennbaren Defekten in ein mobiles Eingabegerät, welches der Inspektions-Fachmann bei der Inspektion mit sich führt. Die Defekte können z.B. aufgrund ihrer sichtbaren Struktur gemäss einer vorgegebenen Auswahl klassifiziert und auf Plänen des Bauwerks eingezeichnet werden. Dabei kann der Defekt z.B. über ein grafisches Eingabeprogramm manuell in einem Bauplan eingezeichnet werden oder es kann eine Fotografie vor Ort angefertigt werden. Das Eingabegerät kann zudem programmierte Algorithmen umfassen, um die eingegebenen Defekte zu analysieren.

Während dieses System eine verbesserte Interaktivität und Datenintegration aufweist, erfolgt die Erfassung der Inspektionsdaten wie bei früheren Systemen nur durch den Inspektions-Fachmann und weist somit keine oder nur eine geringe Redundanz auf. Somit basiert auch die vorteilhaft automatisierte Analyse der Defekte einzig auf den erfassten Defekten, d.h. der Wahrnehmung und Sorgfalt des Inspektions-Fachmanns bei deren Erfassung. Das System bietet keinen Schutz gegen Defekte, welche beim Erfassen übersehen werden, bzw. erlaubt auch nicht, im Nachhinein festzustellen, ob ein Defekt übersehen wurde oder erst nach der Inspektion aufgetreten ist.

Es ist daher eine Aufgabe der Erfindung, die Nachteile des Standes der Technik zu überwinden. Insbesondere ist es eine Aufgabe der Erfindung, eine vielseitig anwendbare Anordnung sowie ein vielseitig anwendbares Verfahren zur Inspektion eines Objekts, insbesondere eines Bauwerks, bereitzustellen, welches eine zuverlässige Erfassung des Istzustandes aber auch von baulichen Mängeln ermöglicht. Zudem sollen die Anordnung und das Verfahren komfortabel zu bedienen bzw. auszuführen sein und eine hohe Sicherheit gewährleisten. Die Anordnung und das Verfahren sollen zudem sicherstellen, dass zu einem späteren Zeitpunkt nachvollziehbar ist, an welcher Stelle am Objekt, insbesondere am Bauwerk, eine inspektionsrelevante Situation erfasst wurde.

Diese Aufgaben werden durch eine Anordnung sowie ein Verfahren mit den Merkmalen der unabhängigen Ansprüche gelöst.

Diese betreffen in einem ersten Aspekt eine Anordnung zur Inspektion eines Objekts, insbesondere eines Bauwerks, umfassend eine mobile Messeinheit zur Ermittlung eines dem Objekt zugeordneten Messwerts, wobei die Messeinheit eine Schnittstelle zum Datenaustausch mit weiteren Einheiten der Anordnung, insbesondere einer Basiseinheit, aufweist. Weiter umfasst die Anordnung eine, insbesondere mobile, Basiseinheit, in welcher von der Messeinheit übermittelte Datensätze speicherbar und bevorzugt visuell darstellbar sind und welche eine Schnittstelle zum Datenaustausch mit weiteren Einheiten der Anordnung, insbesondere wenigstens der mobilen Messeinheit, aufweist. Die Basiseinheit weist zudem eine Schnittstelle zum Datenaustausch mit einem proprietären oder öffentlichen Netzwerk auf. Die Anordnung umfasst auch ein Erfassungsmittel zum Erfassen einer Messposition, an welcher der Messwert ermittelt wird, und vorzugsweise zum Erfassen eines Messzeitpunkts, zu welchem der Messwert ermittelt wird. Dabei ist ein von der Messeinheit ermittelter Messwert zumindest zusammen mit einer vom Erfassungsmittel erfassten Messposition, vorzugsweise automatisch, als Datensatz an die Basiseinheit übermittelbar. Die mobile Messeinheit ist dabei zur zerstörungsfreien Ermittlung von Messwerten zu einer internen Struktur und/oder einem internen Zustand von, insbesondere unzugänglichen, Elementen des Objekts, insbesondere Bauelementen des Bauwerks, ausgebildet. Die Ermittlung des Messwerts kann beispielsweise von einem Benutzer vor Ort durchgeführt werden, welcher die Messeinheit bedient. Als Benutzer vor Ort ist hierbei ein während der Inspektion am Objekt anwesender Benutzer, wie z.B. ein mit der Inspektion betrauter Inspektions-Fachmann, bezeichnet. Alternativ kann die Messeinheit auch derart ausgebildet sein, dass sie, beispielsweise über die Basiseinheit, fernsteuerbar ist.

Unter einem Bauwerk wird hier und im Folgenden eine von Menschen errichtete Konstruktion mit ruhendem Kontakt zum Untergrund verstanden. Das Bauwerk kann beispielsweise ein Gebäude sein, welches etwa dem Aufenthalt von Menschen, der Unterbringung von Tieren, der Aufzucht von Pflanzen oder der Lagerung von Sachen oder dem Betrieb von Maschinen dient. Das Bauwerk kann auch ein Verkehrsbauwerk sein, wie etwa eine Brücke, eine Strasse, ein Tunnel oder ein Stollen. Alternativ kann das Bauwerk auch ein Ver- und/oder Entsorgungsbauwerk sein, wie etwa ein Brunnen, eine Wasser- und/oder Abwasserleitung, ein Klärwerk, ein Deich, ein Staudamm, eine Staumauer, ein Wehr, ein Schornstein, ein Turm (wie etwa ein Windturm oder ein Sendeturm), ein Sendemast oder ein Freileitungsmast. Des Weiteren kann das Bauwerk ein Schutzbau sein, wie etwa ein Atomkraftwerk oder ein Schutzwall, ein Schutzdamm, eine Lawinenverbauung, eine Strassengalerie oder ein Schutzraum. Das Bauwerk kann auch eine Wehr- und/oder Befestigungsanlage sein, wie etwa eine Befestigung oder ein Wehrturm. Zudem umfasst der Begriff "Bauwerk" auch Berg- und Tagbauminen sowie temporäre Bauwerke, wie etwa fliegende Bauten, Zelte, Messepavillons, Hilfsbauten, Containerbauten und Lagerstätten.

Ausser Bauwerken umfasst der hier und im Folgenden verwendete Begriff "Objekt" beispielsweise auch insbesondere bewegliche Gegenstände, wie etwa Geräte, Maschinen, Fahrzeuge, Flugzeuge, Möbelstücke, Kunstgegenstände (wobei mit der erfindungsgemässen Anordnung und/oder dem erfindungsgemässen Verfahren beispielsweise deren Echtheit festgestellt werden kann), aber auch lebende Objekte, wie Pflanzen, Tiere oder Menschen.

Unter einer "internen Struktur" und einem "internen Zustand" werden hier und im Folgenden eine Struktur bzw. ein Zustand des Objekts verstanden, die nicht rein visuell erkennbar sind, wie dies beispielsweise durch einen Benutzer mit dem blossen Auge oder mit Hilfe einer Kamera möglich wäre. Die Begriffe "interne Struktur" und "interner Zustand" umfassen also einerseits Strukturen und Zustände im Inneren des Objekts. Sie umfassen aber auch Strukturen und Zustände, die an einer für den Benutzer zwar an sich sichtbaren Oberfläche des Objekts oder im Bereich einer solchen Oberfläche vorliegen, die aber nicht rein visuell erkennbar sind. Beispielsweise wird im Rahmen der Erfindung auch eine Elastizität des Objekts im Bereich einer sichtbaren Oberfläche als interner Zustand angesehen, da eine solche Elastizität nicht rein visuell erkennbar ist.

Die Basiseinheit und/oder die Messeinheit umfassen bevorzugt Mittel zur Speicherung, zur Verarbeitung, zur Ein- und Ausgabe und zum Empfangen und Übermitteln von Daten. Zur Speicherung und Verarbeitung der Daten können eine Speichereinheit und eine Recheneinheit vorhanden sein. Insbesondere kann die Basiseinheit derart ausgebildet sein, dass die weiter unten noch im Detail beschriebenen Datenstrukturen, Programme, Datensätze (originäre und/oder abgeleitete Datensätze) und/oder Anweisungen auf der Basiseinheit speicherbar sind.

Die Mittel zur Eingabe können z.B. eine berührungsempfindliche Fläche und/oder ein Tastenfeld und/oder ein Mikrofon umfassen. Über eine berührungsempfindliche Fläche können durch einen Benutzer beispielsweise Zeichnungen erfasst werden. Ein Tastenfeld erlaubt einem Benutzer die Eingabe von Text einschliesslich Zahlen. Über ein Mikrofon kann eine Spracheingabe erfolgen. Diese somit eingegebenen Daten können dann zusammen mit der/m zugehörigen, von der Messeinheit ermittelten Messwert und einer/m zugehörigen, vom Erfassungsmittel erfassten Messposition und/oder Messzeitpunkt als Datensatz an die Basiseinheit übermittelt und dort optional gespeichert und/oder weiterverarbeitet werden. Auf diese Weise kann eine Art von Logbuch entstehen, in dem festgehalten werden kann, welcher Benutzer zu welchem Zeitpunkt und an welchem Ort welche Messung wie und aus welchem Anlass durchgeführt hat.

Die Mittel zur Ausgabe können z.B. einen Drucker umfassen, über welchen beispielsweise ein Messprotokoll ausgegeben werden kann. Die Mittel zur Ausgabe sind allerdings bevorzugt derart ausgebildet, dass objektspezifische, insbesondere bauwerkspezifische, Daten bzw. Datenstrukturen visuell darstellbar sind. Ein kombiniertes Mittel zur Ein- und Ausgabe kann z.B. durch einen berührungsempfindlichen Bildschirm bereitgestellt sein.

Als visuelle Darstellung kann ein, insbesondere dreidimensionales, virtuelles Modell des zu inspizierenden Objekts für den Benutzer vor Ort auf der Basiseinheit und/oder der Messeinheit visuell darstellbar sein. Bei geeigneten Mitteln zur Eingabe kann der Benutzer vor Ort gegebenenfalls mit dem virtuellen Modell interagieren, wie z.B. Ansichten wählen oder Messpositionen markieren. Ebenso können Anweisungen für den Benutzer vor Ort dargestellt werden, wie beispielsweise Messanweisungen für den Benutzer vor Ort, welche z.B. eine Messposition und/oder einen Messzeitpunkt und/oder eine Messart angeben.

In einigen Ausführungsformen kann es genügen, wenn die Anordnung nur eine einzige Basiseinheit enthält. Hierdurch kann der apparative Aufwand reduziert werden. Insbesondere für die Inspektion grösserer und/oder komplexerer Objekte kann die Anordnung aber auch mehrere Basiseinheiten enthalten. Diese können dann jeweils Schnittstellen zum Datenaustausch untereinander aufweisen.

Die Messeinheit ist vorteilhafterweise derart ausgebildet, dass sie vom Benutzer vor Ort tragbar ist; insbesondere kann sie für diesen Zweck entsprechend dimensioniert sein und ein entsprechendes Gewicht haben. Alternativ kann die Messeinheit beispielsweise in oder an einem insbesondere fernsteuerbaren Fahrzeug platziert sein oder platziert werden.

Die Basiseinheit ist bevorzugt als mobile Einheit ausgebildet, welche von einem Benutzer vor Ort z.B. in das Objekt, insbesondere in ein Bauwerk, mitgenommen oder ausserhalb des Objekts, insbesondere ausserhalb eines Bauwerks, z.B. in oder an einem Fahrzeug, platziert werden kann. Die Basiseinheit ist vorteilhafterweise derart ausgebildet, dass sie vom Benutzer tragbar ist; insbesondere kann sie für diesen Zweck entsprechend dimensioniert sein und ein entsprechendes Gewicht haben. Bevorzugt ist die Basiseinheit z.B. in einem Koffer oder nach Art eines Laptop- oder Tablet-Computers ausgebildet. Die Basiseinheit weist bevorzugt ein Schutzgehäuse auf, welches Schutz gegen mechanische Beschädigung z.B. im gefährdeten Umfeld einer Baustelle bietet. Alternativ kann die Basiseinheit beispielsweise in oder an einem insbesondere fernsteuerbaren Fahrzeug platziert sein oder platziert werden. Die Basiseinheit kann grundsätzlich aber auch z.B. als Wartungs- oder Inspektionsterminal fest am Objekt, insbesondere am Bauwerk, angeordnet sein.

Die Basiseinheit weist eine Schnittstelle zum Datenaustausch mit einem, kabelgestützten oder kabellosen, proprietären oder öffentlichen externen Netzwerk auf. Auf diese Weise kann die Basiseinheit an eine lokalisierte (z.B. Servereinheit) oder delokalisierte (so genannte "Cloud") Netzwerkserviceeinheit angebunden sein. Entsprechend können, insbesondere in Echtzeit, Daten an die Netzwerkserviceeinheit übermittelt oder von dieser bezogen werden. Als externe Netzwerke können beispielsweise das Internet (öffentlich) oder ein Mobilfunknetz (proprietär) zur Anwendung kommen.

Es ist auch möglich und liegt im Rahmen der Erfindung, dass die Basiseinheit selbst als Server ausgebildet ist oder einen Server enthält. Ein Datenaustausch zwischen der Schnittstelle der Messeinheit und dem Server kann dann über ein proprietäres oder öffentliches Netzwerk erfolgen. In dieser Ausführungsform sind die von der Messeinheit übermittelten Datensätze in diesem Server speicherbar, und der Server enthält eine Schnittstelle zum Datenaustausch mit weiteren Einheiten der Anordnung.

In anderen Ausführungsformen ist es auch denkbar, dass die Messeinheit und die Basiseinheit zusammen ein integriertes Gerät bilden und beispielsweise in einem gemeinsamen Gehäuse eingeschlossen sind.

Die mobile Messeinheit kann als tragbares Handgerät ausgebildet sein, welches z.B. vom Benutzer vor Ort an der Messposition platziert werden kann. Die Messeinheit umfasst wenigstens eine Messvorrichtung für die Bestimmung interner Strukturen oder eines internen Zustands der Bauelemente. Beispielsweise kann der Zustand von Armierungen in Stahlbetonelementen durch Messung induzierter Wirbelströme und oder Leitfähigkeitsmessungen bestimmt werden. Die mobile Messeinheit weist eine Schnittstelle zum Datenaustausch mit weiteren Einheiten der Anordnung, insbesondere der Basiseinheit, auf. Die Messeinheit kann auf diese Weise z.B. über ein kabelloses lokales Netzwerk (WLAN) an die Basiseinheit oder weitere Einheiten der Anordnung angebunden sein. Ebenso sind selbstverständlich kabelgestützte Anbindungen denkbar. Die ermittelten Messdaten der Messeinheit und gegebenenfalls Positionsdaten des Erfassungsmittels können auf diese Weise z.B. automatisch an die Basiseinheit übermittelt werden. Die Übermittlung kann unmittelbar bei Erfassung der Messwerte oder in vorgegebenen oder adaptierten Zeitabständen erfolgen. Hierfür können die Messdaten in der Messeinheit zwischenspeicherbar sein. Selbstverständlich kann auch eine manuelle Auslösung der Übertragung erforderlich sein, oder eine Übertragung erfolgt erst nach einer Anbindung der Messeinheit an die Basiseinheit, z.B. durch Anschluss eines Kabels.

"Messposition" kann hierbei eine Position bezeichnen, welche bezüglich eines z.B. globalen Koordinatensystems wie GPS-Koordinaten angegeben wird. Ebenso kann die Messposition auch bezüglich eines lokalen Referenzsystems wie z.B. des Objekts selbst oder eines spezifisch zur Inspektion des Objekts eingerichteten Positionierungssystems angegeben sein. Eine Bestimmung der Messposition kann insbesondere auch visuell erfolgen bzw. angegeben werden, z.B. über fotografische oder filmische Erfassung des Messvorgangs bzw. der Messposition in Relation zu weiteren Merkmalen des Objekts mit bekannter Position, so wie dies weiter unten noch detaillierter beschrieben wird.

Das Erfassungsmittel kann zur manuellen Eingabe der Messposition z.B. als Zahlenfolgen ausgebildet sein. Ebenso kann die Messposition z.B. über eine manuelle Markierung der Messposition auf einem auf der Messeinheit dargestellten virtuellen Modell des Objekts erfolgen. Das Erfassungsmittel kann hierfür z.B. als Tastenfeld und/oder als berührungsempfindlicher Bildschirm in die Messeinheit integriert sein. Selbstverständlich kann das Erfassungsmittel auch einen Empfänger für Signale eines satellitengestützten (z.B. GPS) oder erdgebundenen globalen Positionierungssystems umfassen, welcher z.B. in der Messeinheit ausgebildet ist. Ebenso kann der Empfänger z.B. zum Empfang von Signalen eines oder mehrerer Funkfeuer ausgebildet sein, welche vor Ort beim Objekt zur Erstellung eines Koordinatensystems eingerichtet sind und z.B. eine Triangulierung der Messposition erlauben. Eine Bestimmung der Messposition kann automatisch bei der Erfassung des Messwerts ausgelöst werden.

Die erforderlichen Funktionalitäten der einzelnen Einheiten oder Mittel können je nach Erfordernis via Hardware und/oder Software implementiert sein. Je nach Erfordernis können auch Interaktionen des Benutzers vor Ort erforderlich sein.

Aufgrund der separaten Basiseinheit kann z.B. ein weiterer Benutzer vor Ort, aber nicht notwendig an der Messposition, die Erfassung der Messwerte überwachen. Insbesondere kann an der Basiseinheit sichergestellt werden, dass die erfassten Messwerte an den korrekte Messpositionen erfolgt sind, wie sie z.B. in einem Inspektionsplan vorgesehen sind. Insbesondere kann auch direkt vor Ort beim Objekt überprüft werden, ob die Messpositionen und Messwerte z.B. an der korrekten Position in einem in der Basiseinheit abgespeicherten Plan des Objekts, insbesondere in einem in der Basiseinheit abgespeicherten Bauplan eines Bauwerks, eingetragen wurden. Bestehen Anzeichen einer fehlerhaften oder unvollständigen Erfassung, kann der Inspektions-Fachmann an der Basiseinheit Einfluss auf den Verlauf der Inspektion nehmen und z.B. eine erneute oder zusätzliche Durchführung einer Messung anordnen. Der weitere Benutzer vor Ort an der Basiseinheit hat dabei den Vorteil, dass eine Überwachung der Inspektion in komfortabler Umgebung und mit Zugriff auf diverse Zusatzinformationen erfolgen kann, die er beispielsweise über das Netzwerk beziehen kann.

Indem eine Messung erfindungsgemäss zerstörungsfrei erfolgt, kann auch an Stellen, an denen aus statischen oder bautechnischen Gründen (z.B. Platzmangel, schwer zugängliche Stellen) keine Kernproben für eine Laboranalyse entnommen werden können, auf rasche Art und Weise ein Überblick über den internen Zustand oder eine interne Struktur z.B. eines Betonbauelements gewonnen werden. Auf diese Weise erlaubt die Anordnung eine direkte Messung von z.B. internen strukturellen Defekten und/oder Störungen und nicht nur deren Annahme aufgrund von äusserlich erkennbaren Defekten. Insbesondere können unabhängig von der Wahrnehmung des Benutzers vor Ort von aussen unsichtbare Defekte ermittelt werden. Auf diese Weise lässt sich die Anordnung besonders vielseitig anwenden, z.B. auch zur Abnahme eines neu erstellten Objekts. Beispielsweise lässt sich mit einer als Bewehrungsprüfgerät ausgebildeten Messeinheit der vorliegenden Anordnung prüfen, ob die Bewehrungen in einem Betonelement eines Bauwerks den baulichen Vorgaben entsprechen. Derartige bauliche Mängel sind visuell nicht erkennbar.

Aufgrund der Basiseinheit können diese ermittelten Daten direkt vor Ort am Objekt z.B. in ein Datenmodell bzw. eine Datenstruktur integriert und visualisiert werden. Somit kann unmittelbar vor Ort erkennbar werden, dass z.B. aufgrund eines ermittelten internen Defekts in einer Umgebung der Messposition weitere Messungen und/oder visuelle Inspektionen vorgenommen werden müssen. Indem die Messeinheit, insbesondere auch mehrere, vorzugsweise unterschiedliche Messeinheiten, an die Basiseinheit anbindbar sind, können die von den unterschiedlichen Messeinheiten ermittelten Daten von der Basiseinheit zentral erfasst werden. Die Basiseinheit erlaubt dabei z.B. eine Integration der unterschiedlichen ermittelten Daten in eine bestehende Datenstruktur, welche einen internen Zustand der gemessenen Elemente des Objekts, insbesondere der gemessenen Bauelemente des Bauwerks, wiedergibt. Die Datenstruktur kann in der Basiseinheit speicherbar sein. Insbesondere kann diese Datenstruktur auch Pläne sowie weitere Informationen zum Objekt, insbesondere Baupläne sowie weitere Informationen zum Bauwerk, umfassen, sodass gesamthaft ein umfassendes virtuelles Modell des Objekts geschaffen werden kann, welches einen aktuellen Zustand des Objekts zuverlässig wiedergibt. Sämtliche angebundenen Messeinheiten können somit ohne übermässigen Synchronisationsaufwand auf eine aktualisierte zentrale Datenstruktur zugreifen.

Die Datenstruktur kann dabei auch Messdaten früherer Inspektionen umfassen, sodass eine Historie der Elemente bzw. des Objekts, insbesondere der Bauelemente bzw. des Bauwerks, erfassbar ist. Die mit den Daten zur internen Struktur der Elemente, insbesondere der Bauelemente, ergänzte Datenstruktur kann z.B. als virtuelles Modell oder auf andere Weise von der Basiseinheit visualisiert oder ausgegeben werden. Es versteht sich, dass alternativ oder zusätzlich z.B. die Datenstruktur und/oder die visuelle Darstellung auf einem Server abgelegt bzw. erzeugt werden kann, an welchen die Basiseinheit angebunden ist (siehe unten). Ebenso versteht es sich, dass die Basiseinheit erforderlichenfalls auch nur zum Sammeln und Weiterleiten von mit der erfindungsgemässen Anordnung gewonnenen Datensätzen ausgebildet ist.

Die Datenstruktur sowie z.B. eine visuelle Aufbereitung der Daten kann in diesem Fall auf dem Server erfolgen.

Bevorzugt ist die mobile Messeinheit zur Durchführung wenigstens einer oder mehrerer der im Folgenden genannten Messungen ausgebildet:
- Ultraschallmessung,
- Radiographie (insbesondere penetrierende Radarmessung),
- Wirbelstrommessung,
- elektrische Widerstandsmessung,
- Potentialfeldmessung,
- Rückprallmessung,
- akustische Resonanzanalyse (insbesondere gemäss Richtlinie US06 der DGZfP (Deutsche Gesellschaft für Zerstörungsfreie Prüfung), beispielsweise mit dem Erudite-System, erhältlich von CNS Farnell Limited, Hertfordshire, UK),
- induktive Bewehrungsortung (insbesondere gemäss DGZfP-Merkblatt B02, beispielsweise mit Profoscope PS 250, erhältlich von Proceq SA, Schwerzenbach, Schweiz),
- kapazitive Bewehrungsortung (insbesondere gemäss DGZfP-Merkblatt B02, beispielsweise mit PS 38 Multidetektor, erhältlich von Hilti Corporation, Adliswil, Schweiz),
- Bodenradar (englisch: "Ground Penetrating Radar" (GPR), insbesondere gemäss DGZfP-Merkblatt B10),
- Dehnungsmessstreifen-Prüfung,
- Dichtheitsprüfung (insbesondere gemäss einer oder mehreren der Normen EN 1779, EN 13184, EN 13185 und EN 1593),
- Durchstrahlungsprüfung (insbesondere gemäss einer oder mehreren der Normen EN 444, EN 13068 und EN 16016, insbesondere Durchstrahlungsprüfung mit Hilfe von Röntgenstrahlung),
- Eindringprüfung (insbesondere gemäss der Norm EN 571-1),
- kapazitive Feuchtemessung (insbesondere gemäss der Norm EN 13183-3, beispielsweise mit einem der Feuchtigkeitsmessgeräte von Tramex Ltd., Dublin, Irland),
- resistive Feuchtemessung (insbesondere gemäss der Norm EN 13183-3, beispielsweise mit einem der Feuchtigkeitsmessgeräte von Tramex Ltd., Dublin, Irland),
- Impakt-Echo-Verfahren (insbesondere gemäss DGZfP-Merkblatt B11, beispielsweise mit einem der Geräte von James Instruments Inc., Chicago, USA),
- Infrarotthermografie (insbesondere gemäss einer oder mehreren der Normen DIN 54190, DIN 54192 und EN 13187, unter Ausnutzung von Wärmeabstrahlung, passiv oder durch aktives Vorheizen),
- Leitfähigkeitsprüfung (beispielsweise mit einer Wenner-Sonde, wie etwa Resipod, erhältlich von Proceq SA, Schwerzenbach, Schweiz),
- magnetinduktive Methode (insbesondere gemäss der Norm ISO 2178),
- Magnetpulverprüfung (insbesondere gemäss der Norm ISO 9934),
- Potentialfeldmessung (insbesondere gemäss DGZfP-Merkblatt B03, beispielsweise mit dem Canin-System, erhältlich von Proceq SA, Schwerzenbach, Schweiz),
- Rückprallhammerverfahren (insbesondere gemäss der Norm EN 12504-2, beispielsweise mit dem Schmidt-Hammer, erhältlich von Proceq SA, Schwerzenbach, Schweiz),
- Schallemissionsanalyse (insbesondere gemäss der Norm EN 12504-2),
- Shearografie (Laser Speckle Shearing Interferometry), insbesondere zur mobilen Inspektion zur zerstörungsfreien Prüfung von Composit-Bauteilen),
- Streufeldmessung (insbesondere zur Detektion von Ermüdungen und/oder von Spannungsrissen in Spannbeton-Bauwerken),
- Ultraschallprüfung (insbesondere gemäss der Norm EN 583, und/oder des DGZfP-Merkblatts B04, beispielsweise mit dem Pundit-System, erhältlich von Proceq SA, Schwerzenbach, Schweiz),
- Vibrationsprüfung/Schwingungsanalyse (insbesondere gemäss mindestens einer der Normen ISO 13373 und DIN 45669),
- Wirbelstromprüfung (insbesondere gemäss der Norm ISO 15549, beispielsweise zur Rissprüfung, zur Schichtdickenmessung und/oder zur Bestimmung von Materialeigenschaften),
- Zeitbereichsreflektometrie (insbesondere gemäss der Norm DIN 19745, beispielsweise mit dem TRIME-System, erhältlich von der IMKO GmbH, Ettlingen, Deutschland),
- laserinduzierte Plasma-Spektroskopie (LIPS),
- Metallhärtemessung (insbesondere zur Messung der Leeb-Härte, der Rockwell-Härte, der Brinell-Härte und/oder der Vickers-Härte),
- Magnetic Resonance Imaging (MRI, wie beispielsweise aus medizinischen Anwendungen bekannt),
- Röntgenfluoreszenzmessung (beispielsweise mit dem Gerät FISCHERSCOPE^{®} X-RAY XDV^{®}-SD, erhältlich von Helmut Fischer AG, Hünenberg, Schweiz),
- Mikro-Widerstand-Verfahren (insbesondere gemäss der Norm DIN EN 14571:2005, beispielsweise mit dem Gerät SR-SCOPE^{®} RMP30-S, erhältlich von Helmut Fischer AG, Hünenberg, Schweiz),
- Beta-Rückstreumethode (insbesondere gemäss mindestens einer der Normen DIN EN ISO 3543, ASTM B567 und BS 5411, beispielsweise mit einem FISCHERSCOPE^{®} MMS^{®}, erhältlich von Helmut Fischer AG, Hünenberg, Schweiz),
- coulometrische Messung (insbesondere gemäss der Norm DIN EN ISO 2177:2004-08, beispielsweise mit dem Gerät COULOSCOPE^{®}, erhältlich von Helmut Fischer AG, Hünenberg, Schweiz),
- lineares Polarisationsverfahren (insbesondere zur Abschätzung eines Korrosionsstroms in Stahlbeton).

Eine Ultraschallmessung basiert grundsätzlich auf einer Pulsgeschwindigkeitsmessung eines Ultraschallpulses. Mit einer Wellenform-Analyse können Rückschlüsse auf die Eigenschaften des Baumaterials gezogen werden. Auf diese Weise können sowohl die Homogenität des Baumaterials überprüft als auch Defekte aufgezeigt werden. Der Impuls bzw. die Geschwindigkeit hängt mit der Dichte und Elastizität des zu prüfenden Baumaterials zusammen, was z.B. eine Aussage betreffend Qualität und Druckfestigkeit ermöglicht.

Bei einer penetrierenden Radarmessung wird die innere Struktur des Bauelements durch Reflexion elektromagnetischer Strahlung an Störstellen gemessen. Dabei werden in der Regel sehr kurze elektromagnetische Impulse von wenigen Picosekunden bis zu einigen Nanosekunden Länge in das Innere des Bauelements abgestrahlt und die Reflexion aufgenommen. Die Ausbreitung der elektromagnetischen Wellen im Inneren ist dabei abhängig von den im Bauelement befindlichen Strukturen, die Reflexion, Streuung, Beugung und Transmission des eingestrahlten Signals hervorrufen. Aufgezeichnet werden meist die Laufzeit, die Phase und die Amplitude des reflektierten Signals.

Bei der Wirbelstrommessung wird z.B. durch eine Spule ein wechselndes Magnetfeld erzeugt, welches in einem leitfähigen Baumaterial Wirbelströme induziert. Bei der Messung wird mittels eines Sensors, der meist auch die Erregerspule umfasst, die Wirbelstromdichte durch das vom Wirbelstrom erzeugte Magnetfeld detektiert. Die gemessenen Parameter umfassen in der Regel die Amplitude und die Phasenverschiebung zum Erregersignal. Zu deren Messung benutzt man üblicherweise eine zweite Spule im Sensor. Gelegentlich werden auch andere Magnetfeldsensoren, wie GMR-Sensoren (Giant Magnetoresistance - GMR) oder so genannte SQUIDs (Superconducting Quantum Interference Device - SQUID) eingesetzt. Bei der Wirbelstromprüfung wird der Effekt ausgenutzt, dass die meisten Verunreinigungen und Beschädigungen in einem elektrisch leitfähigen Material auch eine andere elektrische Leitfähigkeit oder eine andere Permeabilität als das eigentliche Material haben.

Die Messung des spezifischen elektrischen Widerstands gibt Aufschluss über den Zustand eines Bauelements wie z.B. eines Stahlbetonelements. Der spezifische Widerstand steht in engem Zusammenhang mit der Korrosionswahrscheinlichkeit und der Korrosionsgeschwindigkeit. Ebenso kann der spezifische Widerstand direkt mit einer Chloriddiffusionsgeschwindigkeit korrelieren. Bei der Messung wird in der Regel ein erstes Paar Elektroden mit dem Baumaterial in Kontakt gebracht. Zwischen den Elektroden wird eine Spannung angelegt. Anschliessend wird die Potenzialdifferenz zwischen einem weiteren Elektrodenpaar gemessen. Daraus sowie aus der Anordnung der Elektroden lässt sich der spezifische Widerstand berechnen.

Bei der Potentialfeldmessung kann festgestellt werden, ob eine Korrosionsaktivität z.B. an einer Bewehrung im Stahlbeton vorhanden ist. Dabei wird in gewissen Abständen über die ganze Betonfläche ein elektrochemisches Potential zwischen Stahl und Beton, genauer gesagt zwischen dem Stahl und einer auf den Beton gesetzten Halbzelle (z.B. Kupfer/Kupfersulfat-Bezugselektrode), gemessen. Aus dem so ermittelten Potentialfeld lassen sich anodische und kathodische Bereiche ermitteln. Bei Bereichen mit anodischem Potential korrodiert der Stahl oder ist zumindest besonders korrosionsgefährdet.

Bei der Rückprallmessung wird in der Messeinheit im Grunde ein Schlagbolzen beschleunigt, welcher auf das Baumaterial aufschlägt und zurückprallt. Je härter das Baumaterial ist, desto weiter prallt der Bolzen zurück. Die Rückprallstrecke wird z.B. auf einer Skala angezeigt oder automatisch erfasst und ist ein Mass für die Rückprallenergie. Daraus kann eine Festigkeit des Baumaterials abgelesen werden. Mit einer Reihe von Messungen kann aufgrund unterschiedlicher Druckfestigkeiten eine interne Struktur des Baumaterials ermittelt werden.

Selbstverständlich kann die Anordnung mehrere Messeinheiten beruhend auf unterschiedlichen Messprinzipien umfassen. Ebenso können einzelne Messeinheiten auch Messvorrichtungen für mehrere Messmethoden umfassen. Selbstverständlich können auch Messeinheiten zur Anwendung kommen, welche auf anderen zerstörungsfreien Messprinzipien zur Messung von inneren Strukturen oder einem inneren Zustand des Bauelements geeignet sind. Die vorliegende Auswahl von Messmethoden hat sich jedoch als wirtschaftlich umsetzbar herausgestellt und in der täglichen Anwendung bewährt.

In einer bevorzugten Ausführungsform der Anordnung umfasst das Erfassungsmittel eine insbesondere mobile Aufnahmeeinheit, welche derart ausgebildet und vor der Ermittlung des Messwerts bei einer Messposition positioniert oder positionierbar ist, dass die Ermittlung des Messwertes, insbesondere durch den Benutzer vor Ort, mittels der mobilen Messeinheit durch die Aufnahmevorrichtung fotografisch und/oder filmisch aufnehmbar ist. Die Aufnahmeeinheit ist dabei bevorzugt mobil und als separate und frei positionierbare Einheit ausgebildet. Vorteilhafterweise ist sie derart ausgebildet, dass sie von einem Benutzer vor Ort tragbar ist; insbesondere kann sie für diesen Zweck entsprechend dimensioniert sein und ein entsprechendes Gewicht haben. In einer vorteilhaften Ausführungsform ist die Aufnahmeeinheit an einem Helm angeordnet, den ein Benutzer vor Ort trägt; dies erlaubt zumindest im Wesentlichen die Aufnahme des Blickfeldes des Benutzers, insbesondere während er eine Messung mit Hilfe der Messeinheit durchführt. Die Aufnahmeeinheit ist bevorzugt über eine Schnittstelle an die Basiseinheit angebunden oder anbindbar, wobei die Schnittstelle kabelgebunden oder kabellos sein kann. Gegebenfalls kann die Aufnahmeeinheit auch an die Messeinheit angebunden sein, wobei auch diese Anbindung kabelgebunden oder kabellos sein kann.

Die Aufnahmeeinheit erlaubt es dabei, einen Bereich des Objekts, in welchem Messwerte z.B. an verschiedenen Messpositionen ermittelt werden, gleichzeitig mit einem insbesondere festen Blickfeld zu erfassen. Das Blickfeld umfasst bevorzugt wenigstens die mobile Messeinheit und/oder den Benutzer vor Ort bei der Ermittlung des Messwerts sowie eine Umgebung der Messposition. Die Aufnahmeeinheit kann hierzu vom Benutzer vor Ort im Vorfeld der Ermittlung der Messwerte positioniert werden. Indem die Aufnahmeeinheit die Ermittlung der Messwerte z.B. fotografisch und/oder filmisch aufzeichnet, kann zu einem späteren Zeitpunkt zweifellos nachgewiesen werden, an welchen Stellen des Objekts welche Messwerte ermittelt wurden und gegebenenfalls durch welchen Benutzer vor Ort sie ermittelt wurden.

Die Aufnahmeeinheit kann einen Zwischenspeicher (Bufferspeicher) umfassen, welcher gemäss einem FIFO-Prinzip (First-In-First-Out) Aufnahmen während eines insbesondere vordefinierten begrenzten Zeitraums (beispielsweise 5 Sekunden) speichert. Auf diese Weise können zu jedem Messzeitpunkt Aufnahmen vor, während und nach der Ermittlung der Messwerte gespeichert werden. Der Aufnahmezeitpunkt kann z.B. automatisch durch die Vornahme der Messung mit der Messeinheit ausgelöst werden. Die Aufnahmeeinheit, z.B. deren Blickfeld, kann dabei z.B. als Referenzsystem für die Bestimmung der Messpositionen dienen. Ebenso kann die Aufnahmeeinheit z.B. Funkfeuer zur Positionsbestimmung der Messeinheiten via Radiowellen umfassen.

Bevorzugt ist mit der Aufnahmeeinheit zumindest ein Blickfeld erfassbar, welches wenigstens den Benutzer bei der Ermittlung des Messwerts und eine Umgebung der Messposition erfasst. Auf diese Weise sind Grössenverhältnisse und eine Position des Benutzers vor Ort bei der Durchführung der Messungen auf den Aufnahmen erkennbar. Die Aufnahmeeinheit kann hierzu z.B. eine Weitwinkel- oder Panoramakamera umfassen. Selbstverständlich kann bei geeigneter Ausbildung auch eine herkömmliche Kamera zum Einsatz kommen.

Die Anordnung kann ein Triangulierungssystem umfassen. Mit einem Triangulierungssystem ist hierbei ein System bezeichnet, mit welchem aufgrund z.B. boden- und/oder satellitengestützter Signale eine Position der Messeinheit, insbesondere eine Messposition, beim Messvorgang ermittelbar ist. Als bodengestütztes Triangulierungssystem können z.B. ein Funkfeuer oder ein Antennensystem vor Ort beim Objekt zur Anwendung kommen. Als satellitengestütztes Triangulierungssystem kann z.B. ein globales Positionierungssystem wie das frei verfügbare GPS zur Anwendung kommen.

Die Anordnung, insbesondere die mobile Messeinheit, kann alternativ oder zusätzlich ein Wegaufnahmesystem enthalten, mit dessen Hilfe die Bewegung der mobilen Messeinheit bestimmbar ist. Das Wegaufnahmesystem kann in die Messeinheit integriert sein. Das Wegaufnahmesystem kann beispielsweise ein Rad umfassen, welches während der Messung auf einer Oberfläche des inspizierten Objekts entlang gerollt wird. Aus der Rotation des Rades kann auf die Bewegung der mobilen Messeinheit geschlossen werden. Zu diesem Zweck kann das Rad einen Magneten enthalten, dessen Bewegung induktiv festgestellt wird.

Selbstverständlich kann das Erfassungsmittel in Varianten auch ein z.B. mittels Laser projiziertes Koordinatennetz umfassen, mit welchem eine Messposition bestimmbar ist.

Die Anordnung kann weiter eine Markierungseinheit umfassen, mit welcher die Messposition am Objekt markierbar ist. Auf diese Weise können die Messpositionen für eine spätere Bezugnahme direkt am Objekt sichtbar markiert werden. Denkbar ist beispielsweise das Aufbringen der Markierung mittels einer separaten Markierungspistole (z.B. nach Art eine Paintball-Pistole). Bevorzugt ist die Markierungseinheit jedoch in die Messeinheit integriert, sodass die Messposition bei der Ermittlung des Messwerts markierbar ist.

Die Markierung kann eine Farbmarkierung umfassen oder z.B. für den Fall, dass der zu markierende Bereich visuell nicht beeinträchtigt werden soll, eine fluoreszierende Markierung, welche erst in einem spezifischen Licht sichtbar wird. Die Markierungseinheit kann nach Art eines Tintenstrahldruckers funktionieren. Auf diese Weise kann nicht nur die Messposition markiert werden, sondern es können auch noch zusätzliche Angaben wie z.B. Art und Zeitpunkt der Messung vermerkt werden. Die Markierungsdaten können identisch an die Basiseinheit übermittelt werden, sodass eine dem Objekt zugeordnete Datenstruktur und das Objekt selbst dieselben Markierungsangaben umfasst.

Die Anordnung kann weiter eine Makro-Aufnahmeeinheit umfassen, mit welcher eine unmittelbare Umgebung der Messposition fotografisch und/oder filmisch aufnehmbar ist. Die Makro-Aufnahmeeinheit ist dabei von der oben genannten Aufnahmeeinheit dahingehend zu unterscheiden, dass die Makro-Aufnahmeeinheit zur Aufnahme einer Detailansicht der Messposition vorgesehen ist. Die Makro-Aufnahme dient dazu, den Zustand des Bauelements an der Messposition detailliert zu dokumentieren. Die Makro-Aufnahmeeinheit kann hierzu eine für Makro-Aufnahmen geeignete Kamera und/oder eine Mikroskopkamera umfassen. Bevorzugt ist die Makro-Aufnahmeeinheit in die Messeinheit integriert, sodass die unmittelbare Umgebung der Messposition bei der Ermittlung des Messwerts aufnehmbar ist. Auf diese Weise ist sichergestellt, dass die korrekte Messposition von der Makro-Aufnahmeeinheit im Zustand während oder kurz vor oder kurz nach der Messung aufgenommen wird.

Ebenfalls alternativ oder zusätzlich kann die Anordnung ein Trägheitsnavigationssystem umfassen. Mit einem Trägheitsnavigationssystem ist, ausgehend von einem bekannten Startpunkt z.B. am Objekt, eine aktuelle Position per Integration von Daten von Beschleunigungssensoren ermittelbar. Ein derartiges System verfügt in der Regel über insgesamt sechs kinematische Freiheitsgrade, davon drei translatorische sowie drei rotatorische, die sich an ebenfalls drei zueinander orthogonal stehenden Einheitsvektoren orientieren. Mit dieser Sensorik lässt sich das Körperkoordinatensystem in Echtzeit bestimmen und über eine kinematische Transformation mit einem feststehenden, vorher bekannten, Raumkoordinatensystem vergleichen, was eine Anwendung als Navigationssystem ermöglicht.

Das Trägheitsnavigationssystem kann in einer ersten Variante in die Aufnahmeeinheit des Erfassungsmittels integriert sein. Hierdurch kann besonders einfach ermittelt werden, in welcher Richtung die Aufnahmen von der Aufnahmeeinheit aufgenommenen werden. In einer zweiten Variante kann das Trägheitsnavigationssystem aber auch in eine Makro-Aufnahmeeinheit integriert sein. Hierdurch kann besonders einfach ermittelt werden, in welcher Richtung die Aufnahmen von der Makro-Aufnahmeeinheit aufgenommenen werden. Dies ist besonders dann vorteilhaft, wenn die Makro-Aufnahmeeinheit in der mobilen Messeinheit integriert ist und die unmittelbare Umgebung der Messposition aufgenommen wird. Die Anordnung kann zur wiederholten Ermittlung eines Messwerts an einer ausgewählten Messposition eine temporär oder dauerhaft am Objekt angebrachte Überwachungseinheit umfassen, welche eine Schnittstelle zum Datenaustausch mit weiteren Einheiten der Anordnung, insbesondere der Basiseinheit und/oder einem weiter unten noch näher beschriebenen Server, aufweist. Die Überwachungseinheit kann beispielsweise zur Durchführung wenigstens einer oder mehrerer der folgenden Messungen ausgebildet sein:
- Ultraschallmessung,
- Radiographie,
- Wirbelstrommessung,
- elektrische Widerstandsmessung,
- Potentialfeldmessung,
- Rückprallmessung,
- akustische Resonanzanalyse,
- induktive Bewehrungsortung,
- kapazitive Bewehrungsortung,
- Bodenradar,
- Dehnungsmessstreifen-Prüfung,
- Dichtheitsprüfung,
- Durchstrahlungsprüfung,
- Eindringprüfung,
- resistive Feuchtemessung,
- Impakt-Echo-Verfahren,
- Infrarotthermografie,
- Leitfähigkeitsprüfung,
- magnetinduktive Methode,
- Magnetpulverprüfung,
- Potentialfeldmessung,
- Rückprallhammerverfahren,
- Schallemissionsanalyse,
- Shearografie,
- Streufeldmessung,
- Ultraschallprüfung,
- Vibrationsprüfung/Schwingungsanalyse,
- Wirbelstromprüfung,
- Zeitbereichsreflektometrie,
- laserinduzierte Plasma-Spektroskopie,
- Metallhärtemessung,
- Magnetic Resonance Imaging,
- Röntgenfluoreszenzmessung,
- Mikro-Widerstand-Verfahren,
- Beta-Rückstreumethode,
- coulometrische Messung,
- lineares Polarisationsverfahren.
- Feuchtigkeitsmessung,
- Temperaturmessung,
- Strahlungsmessung (beispielsweise Messung elektromagnetischer und/oder radioaktiver Strahlung),
- Beschleunigungsmessung,
- lineare Wegaufnahmemessung,
- Rotationsmessung,
- Messung im Objekt enthaltener optischer Fasern.

Hinsichtlich der Messungen kann die Überwachungseinheit weitgehend analog einer wie oben beschriebenen Messeinheit ausgebildet sein. Bei der Überwachungseinheit können grundsätzlich aber auch andere Messprinzipien wie z.B. einer visuellen Inspektion, insbesondere einer rein visuellen Inspektion, einer Aussenseite des Bauelements zur Anwendung kommen. Die Überwachungseinheit braucht allerdings nicht mobil zu sein, und es kann grundsätzlich auch auf Eingabe- und Ausgabemittel verzichtet werden. Die Überwachungseinheit kann eine Schnittstelle zur Anbindung an ein externes Netzwerk umfassen, sodass Messdaten ohne Umweg über die Basiseinheit z.B. direkt an eine Netzwerkserviceeinheit übermittelbar sind.

Die Anordnung, insbesondere die Messeinheit, kann ferner ein Aufzeichnungsgerät enthalten, welches zumindest einen Beschleunigungswert und/oder einen Feuchtigkeitswert und/oder einen Temperaturwert und/oder einen spezifischen Strahlungswert vorzugsweise zusammen mit dem Messzeitpunkt und/oder der Messposition erfasst, wenn zumindest ein vordefinierter Schwellenwert eines dieser Werte überschritten wurde. Durch ein solches Aufzeichnungsgerät können mögliche Beschädigungen der Messeinheit erkannt werden, welche die Messwerte beeinflussen könnten. Das Aufzeichnungsgerät kann in der Messeinheit oder in der Basiseinheit angeordnet sein. Beispielsweise kann eine hohe Beschleunigung der Messeinheit darauf hindeuten, dass die Messeinheit vom Benutzer versehentlich fallengelassen wurde und daher möglicherweise keine zuverlässigen Messerergebnisse mehr liefert. Das Aufzeichnungsgerät kann damit die Funktion einer "Black Box" haben.

Der Datensatz, der an die Basiseinheit übermittelbar und dort speicherbar ist, kann ausser dem von der Messeinheit ermittelten Messwert und der/m vom Erfassungsmittel erfassten Messposition und/oder Messzeitpunkt weiterhin mindestens einen Zusatzmesswert enthalten, wie beispielsweise einen Dehnungswert und/oder einen Feuchtigkeitswert und/oder einen Temperaturwert und/oder einen spezifischen Strahlungswert und/oder einen Beschleunigungswert und/oder einen Messwert, der von einer wie oben beschriebenen Überwachungseinheit ermittelt wurde.

Mit Vorteil ist die Schnittstelle der Basiseinheit zur Anbindung an ein öffentliches oder proprietäres Netzwerk ausgebildet, wobei die Anordnung einen Server umfasst, an welchen die Basiseinheit zum Datenaustausch über das öffentliche oder proprietäre externe Netzwerk angebunden oder anbindbar ist, wobei der Server für einen berechtigten Benutzer über ein, bevorzugt öffentliches, Netzwerk zugänglich ist. Der Server kann dabei eine konkrete Umsetzung der oben genannten Netwerkserviceeinheit sein, mit welcher Dienste über das Netzwerk bereitgestellt oder ausgeführt werden können.

Der Server ist dabei dazu ausgebildet, Daten von der Basiseinheit zu empfangen und abzuspeichern. Ebenso können die Daten vom Server aufbereitbar sein. Ein Server hat gegenüber einer Basiseinheit den Vorteil, dass die ermittelten Daten unabhängig von der Basiseinheit auch Drittpersonen zur Verfügung gestellt werden können, welche nur zum Zugriff auf den Server aber nicht auf die erfindungsgemässe Anordnung zur Inspektion berechtigt sind. Derartige berechtigte Benutzer können z.B. Kunden eines Anbieters der vorliegend beschriebenen Anordnung oder Mitglieder einer Behörde zur Bauabnahme sein, welche auf diese Weise aus erster Hand auf die Inspektionsdaten zugreifen können. Insbesondere können die berechtigten Benutzer die Inspektion des Objekts auf virtuellem Weg auch unmittelbar verfolgen und gegebenenfalls auf diese Einfluss nehmen, beispielsweise durch weiter unten noch im Detail beschriebene Anweisungen.

Der Server umfasst wenigstens eine abgespeicherte Datenstruktur, welche dem zu inspizierenden Objekt zugeordnet ist. Der Server ist dabei dazu ausgebildet, die Datenstruktur mit von der Basiseinheit übermittelten Daten zu ergänzen und dem berechtigten Benutzer, insbesondere in Echtzeit, bereitzustellen. Die Datenstruktur bildet dabei ein einheitliches Format für Daten aus unterschiedlichen Quellen. Einerseits können externe Daten zum Objekt, insbesondere externe Daten zum Bauwerk wie z.B. Baupläne des Bauwerks, historische Inspektionsdaten und/oder technische Spezifikationen oder Normendaten zu den Elementen, insbesondere den Bauelementen, in die Datenstruktur aufgenommen sein. Andererseits kann die Datenstruktur vom Server mit Daten oder Datensätzen der Basiseinheit umfassend Messwerte der Messeinheiten oder gegebenenfalls der Überwachungseinheiten ergänzt werden. Ebenso können z.B. Aufnahmen der insbesondere mobilen Aufnahmeeinheit und/oder der Makro-Aufnahmeeinheit in die Datenstruktur integrierbar sein. Der Server bildet somit ein so genanntes Daten-Warenhaus ("Data-Warehouse"), in welchem Daten zum Objekt aus unterschiedlichen Quellen z.B. in einem einheitlichen Format zusammengefasst (Informationsintegration) und bereitgestellt werden können. Dadurch verbessert sich der Komfort beim Zugang zu den Daten des Objekts.

Die Datenstruktur ist derart beschaffen, dass dem berechtigten Benutzer und/oder dem Benutzer vor Ort aus der Datenstruktur ein virtuell begehbares dreidimensionales Modell des zu inspizierenden Objekts, insbesondere des zu inspizierenden Bauwerks, vom Server bereitgestellt wird. "Begehbar" bezeichnet in diesem Zusammenhang, dass der berechtigte Benutzer z.B. als so genannter Avatar sich im virtuellen Modell weitgehend frei bewegen kann. Dabei kann ein Benutzer vor Ort gleichzeitig im selben Modell als Avatar repräsentiert sein, sodass z.B. Interaktionen zwischen dem berechtigten Benutzer und dem Benutzer vor Ort über den Server möglich sind, wodurch sich eine Art Teambesprechung "vor Ort" ergeben kann. Das virtuelle Modell kann bei entsprechender Ausbildung z.B. auf der Basiseinheit und/oder auf der Messeinheit und/oder auf einem Head-up-Display, insbesondere einem Head-up-Display einer Brille, darstellbar sein, welches der Benutzer vor Ort oder der berechtigte Benutzer tragen kann.

Die Datenstruktur sowie das darauf basierende virtuelle Modell ist vom Server laufend mit den von der Basiseinheit übermittelten Daten zu internen Strukturen und/oder einem internen Zustand der Bauelemente der Messeinheiten anreicherbar. Auf diese Weise ist sichergestellt, dass das vom Server bereitgestellte Modell auf dem neuesten Stand ist und die Inspektion z.B. vom berechtigen Benutzer in Echtzeit überwachbar ist.

In diesem virtuellen Modell können eine Datenstruktur und/oder originäre und/oder abgeleitete Datensätze und/oder Messanweisungen und/oder Aufnahmeanweisungen und/oder Anweisungen zur Ermittlung mindestens eines Zusatzmesswertes in Echtzeit überlagert werden, so dass ein "Virtual Augmented Reality"-Modell entsteht. Die Messpositionen sind im virtuellen Modell markierbar und als Verweis (ähnlich einem Verweis (Hyperlink) einer Internetseite) ausbildbar, sodass bei entsprechender Aktion des Benutzers die gewünschten Informationen zu einem internen Zustand und/oder einer internen Struktur abgerufen werden kann. Im virtuellen Modell sind die internen Strukturen durch halbtransparente Wände hindurch sichtbar dargestellt, wobei zusätzliche Informationen wie Soll-Werte oder rechnerisch simulierte Werte z.B. einer Korrosion einer Bewehrung eingeblendet werden können. Dabei können kritische Messwerte zu internen Defekten bzw. defektive Bereich z.B. farblich hervorgehoben sein.

Bevorzugt umfasst der Server eine Bibliothek von Programmen, mit welchen durch den berechtigten Benutzer gezielt ausgewählte Datensätze der Datenstruktur aufbereitbar und/oder abrufbar sind.

Auf diese Weise können aus der Datenstruktur einerseits z.B. dreidimensionale Ansichten und andererseits Objekt-Reporte, insbesondere Bauwerk-Reporte, generiert werden. Die Programme der Bibliothek erlauben dabei, die entsprechenden relevanten Daten einerseits aus der Datenstruktur zu extrahieren und andererseits in der gewünschten Form aufzubereiten.

Mit Vorteil kann von einem berechtigten Benutzer über den Server eine Anweisung übermittelt werden. Beispielsweise kann an die Basiseinheit, und gegebenenfalls von dieser, an die Überwachungseinheit und/oder an die mobile Messeinheit und/oder an den Benutzer vor Ort eine Messanweisung übermittelbar sein. Insbesondere, wenn die Messeinheit fernsteuerbar ist, wird die Messanweisung bevorzugt direkt an die Messeinheit übermittelt. Die Messanweisung kann z.B. eine Messposition und/oder einen Messzeitpunkt und/oder eine Art der Messung umfassen, welche vom Benutzer vor Ort durchgeführt werden soll. Die Übermittlung einer oder mehrerer Messanweisungen kann in Echtzeit erfolgen. Alternativ oder zusätzlich können eine oder mehrere Messanweisungen aber auch vorab zusammengestellt und dem Benutzer vor Ort dann gesammelt zur Verfügung gestellt werden. Die Messanweisung oder mehrere Messanweisungen können z.B. vor der Inspektion auf dem Server in der Form eines Inspektionsplans für den Benutzer vor Ort zusammengestellt werden. Gegebenenfalls können die gewünschten Messpositionen im virtuellen Modell dargestellt sein. Bevorzugt wird die Messanweisung jedoch in Echtzeit an den Benutzer vor Ort übermittelt, sodass z.B. vom berechtigten Benutzer direkt Einfluss auf die Inspektion genommen werden kann. Der berechtigte Benutzer muss hierzu nicht vor Ort beim Objekt sein.

Alternativ oder zusätzlich kann an das Erfassungsmittel eine Anweisung zur Ermittlung mindestens eines Zusatzmesswertes übermittelt werden, beispielsweise eines Dehnungswertes und/oder einen Feuchtigkeitswertes und/oder eines Temperaturwertes und/oder eines spezifischen Strahlungswertes und/oder eines von einem Beschleunigungssensor ermittelten Beschleunigungswertes. Vorzugsweise erfolgt die Übermittlung des Zusatzmesswertes in Echtzeit.

Ebenfalls alternativ oder zusätzlich kann an die insbesondere mobile Aufnahmeeinheit und/oder an die Makro-Aufnahmeeinheit eine Aufnahmeanweisung übermittelt werden, vorzugsweise in Echtzeit.

Die Messanweisung und/oder die Anweisung zur Ermittlung mindestens eines Zusatzmesswertes und/oder die Aufnahmeanweisung kann Angaben dazu enthalten, an welcher Messposition die Messung oder Aufnahme erfolgen soll. Es ist dabei denkbar, dass die Messung oder Aufnahme automatisch erfolgt, wenn die vorgegebene Messposition erreicht ist. Die Anordnung, insbesondere die Messeinheit oder die Makro-Aufnahmeeinheit, kann zu diesem Zweck entsprechend programmiert sein oder werden, dass die Messung oder Aufnahme dann automatisch erfolgt.

Der Server kann als lokalisierte Servereinheit z.B. bei einem Anbieter der vorliegend beschriebenen Anordnung zur Bausinspektion ausgebildet sein. Bevorzugt ist der Server allerdings als dynamisch an einen Bedarf anpassbare informationstechnische Infrastruktur, insbesondere als Cloud-basierter Server, bereitgestellt. Auf diese Weise können die Kapazitäten des Servers bei Bedarf problemlos ausgeweitet werden. Beispielsweise kann der Server im Falle einer besonders umfangreichen Datenstruktur aufgrund einer hohen Komplexität des Objekts oder bei besonderen Anforderungen seitens eines berechtigten Benutzers an die Qualität der visuellen Darstellung entsprechend erweitert werden. Fällt der Bedarf, können unnötige Ressourcen kostengünstig abgestossen werden.

Durch die delokalisierte Serverstruktur eines Cloud-basierten Servers ist zudem sichergestellt, dass die auf dem Server verfügbaren Daten bzw. die vom Server bereitgestellten Dienstleistungen verfügbar bleiben, auch wenn einzelne Bereiche des Servers ausfallen. Die Spannweite der im Rahmen von Cloud-Computing angebotenen Dienstleistungen umfasst dabei das gesamte Spektrum der Informationstechnik und beinhaltet unter anderem Infrastruktur wie z.B. Rechenleistung, Speicherplatz, Plattformen und Software.

Ein weiterer Aspekt der Erfindung betrifft ein Verfahren zur Inspektion eines Objekts, insbesondere eines Bauwerks, insbesondere zur Durchführung mit einer Anordnung wie vorliegend beschrieben. Das Verfahren umfasst die Schritte:
- zerstörungsfreie Ermittlung eines Messwerts zu einer internen Struktur und/oder einem internen Zustand von, insbesondere unzugänglichen, Elementes des Objekts, insbesondere Bauelementen des Bauwerks, durch eine mobilen Messeinheit,
- Erfassen einer Messposition, an welchem der Messwerts ermittelt wird, und/oder eines Messzeitpunkts, zu welchem der Messwert ermittelt wird, mit einem Erfassungsmittel,
- insbesondere automatisches, Übermitteln des von der Messeinheit ermittelten Messwerts zumindest zusammen mit der vom Erfassungsmittel erfassten Messposition als Datensatz über eine Datenschnittstelle an eine Basiseinheit,
- Speichern des Datensatzes in der Basiseinheit.

Die Messeinheit kann von einem Benutzer vor Ort bedient werden. Es ist jedoch auch denkbar und liegt im Rahmen der Erfindung, dass die Messeinheit fernsteuerbar ist und es keiner Bedienung durch einen Benutzer bedarf.

Die Vorteile dieses Verfahrens erschliessen sich unmittelbar aus der vorliegend beschriebenen Anordnung zur Inspektion eines Objekts, insbesondere eines Bauwerks.

Das Verfahren umfasst zudem die Schritte:
- Übermitteln eines Datensatzes von der Basiseinheit an einen Server, insbesondere umfassend Messwerte zu einer internen Struktur und/oder einem internen Zustand von, insbesondere unzugänglichen, Bauelementen, vorzugsweise über ein öffentliches oder proprietäres Netzwerk, wobei der Server wenigstens eine abgespeicherte Datenstruktur umfasst, welche dem zu inspizierenden Objekt zugeordnet ist,
- Ergänzen der Datenstruktur mit dem von der Basiseinheit übermittelten Datensatz,
- Bereitstellen, insbesondere in Echtzeit, der Datenstruktur, insbesondere auf dem Server, als virtuell begehbares dreidimensionales Modell des zu inspizierenden Objekts, für einen berechtigten Benutzer und/oder einen Benutzer vor Ort.

Alternativ zur oben genannten Ausführungsform kann die Datenstruktur auch auf der Basiseinheit oder einem Head-up-Display bereitgestellt werden.

Bei der zerstörungsfreien Ermittlung eines Messwerts zu einer internen Struktur und/oder einem internen Zustands des Bauelements kommt bevorzugt wenigstens eines der oben bereits genannten Messverfahren zum Einsatz kommt. Die Ermittlung des Messwertes durch den Benutzer vor Ort kann durch die Aufnahmevorrichtung fotografisch und/oder filmisch aufnehmbar sein. Ebenso kann das Verfahren das Positionieren eines als insbesondere mobile Aufnahmeeinheit ausgebildeten Erfassungsmittels bei einer Messposition umfassen, wobei die insbesondere mobile Aufnahmeeinheit vor der Ermittlung des Messwerts derart positioniert wird, dass die Ermittlung des Messwertes durch den Benutzer vor Ort durch die Aufnahmevorrichtung fotografisch und/oder filmisch aufnehmbar ist. Dabei wird von der insbesondere mobilen Aufnahmeeinheit bevorzugt ein Blickfeld erfasst, welches wenigstens den Benutzer bei der Ermittlung des Messwerts und eine Umgebung der Messposition erfasst. Es ist möglich, dass die Erfassung des Blickfeldes nur während eines vordefinierten Zeitraums gespeichert wird.

Um Personen für die Verwendung der erfindungsgemässen Anordnung und/oder des erfindungsgemässen Verfahrens zu schulen, kann es vorteilhaft sein, dass diesen Personen der Server zugänglich gemacht wird. Die Berechtigung kann zeitlich und/oder auf bestimmte Rechte beschränkt werden. Beispielsweise kann sie auf einen Lesezugriff beschränkt werden, so dass diese Personen beispielsweise kein Recht zur Ergänzung und/oder Modifikation der vom Server gespeicherten Datenstruktur haben. Die Personen können aber berechtigt sein, Daten vom Server zu empfangen, um beispielsweise das zu inspizierende Objekt als virtuell begehbares dreidimensionales Modell darzustellen.

Weitere Abwandlungen des Verfahrens erschliessen sich aus der vorliegend beschriebenen Anordnung zur Inspektion eines Objekts.

Die Erfindung wird anhand von Abbildungen exemplarischer Ausführungsformen näher erläutert. Die Figuren zeigen schematisch:
- Fig. 1:: ein Blockdiagramm einer erfindungsgemässen Anordnung umfassend einen Server;
- Fig. 2:: exemplarische Ausführungsformen einer Basiseinheit sowie eines als Aufnahmeeinheit ausgebildeten Erfassungsmittels und einer Messeinheit einer erfindungsgemässen Anordnung;
- Fig. 3:: Darstellung einer Messung durch einen Benutzer vor Ort;
- Fig. 4:: verschiedene Ansichten, wie sie z.B. mit einer Programmroutine aus einer dem Bauwerk zugeordneten Datenstruktur oder aus einem virtuellen Modell erzeugbar sind;
- Fig. 5:: Blockdiagramm mit verschiedenen Ansichten, wie eine ergänzte Datenstruktur als ergänztes virtuelles Modell nach der Durchführung einer Inspektion dargestellt werden kann;
- Fig. 6:: eine auf einem Bildschirm dargestellte visuelle Wiedergabe mit Zeitstrahl.

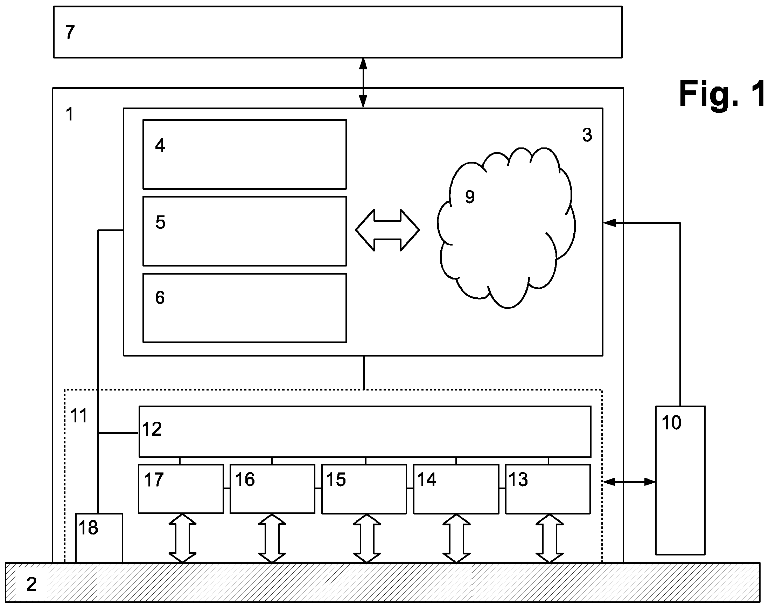

Figur 1 zeigt ein Blockdiagramm einer erfindungsgemässen Anordnung 1 zur Inspektion eines als Bauwerk 2 ausgebildeten Objekts, welche einen Server 3 umfasst. In Fig. 1 sind die funktionellen Einheiten als separate Blöcke dargestellt, welche in konkreten Umsetzungen separat ausgeführt oder zum Teil in einem Gerät zusammengefasst sein können. Der Server 3 kann dabei als lokalisierte Servereinheit z.B. bei einem Anbieter der Anordnung 1 ausgebildet sein. Der Server 3 kann ebenfalls als delokalisierter, Cloud-basierter Server 3 ausgeführt sein.

Der Server 3 umfasst eine Bibliothek von verschiedenen Anwendungen 4, mit welchen auf dem Server 3 gespeicherte Daten oder Datenstrukturen z.B. analysiert, bearbeitet und/oder verwaltet werden können. Je nachdem können z.B. von berechtigten Benutzern 7 selbst Anwendungen 4 geschaffen werden, um z.B. eine individualisierte Datenbearbeitung zu ermöglichen. Dabei kann auf eine Programmbibliothek 5 des Servers 3 zugegriffen werden, welche z.B. standardisierte Programmroutinen für zwei- und/oder dreidimensionale Ausgabe von Daten, Text-Ausgabe und/oder andere Datenaufbereitung aufweisen.

Der Server 3 umfasst eine Datenbank 6, in welcher Daten abgelegt werden können. Die Daten werden bevorzugt in einer vorgegebenen oder dynamisch anpassbaren, vereinheitlichten Datenstruktur abgelegt, welche einen einheitlichen Zugriff auf unterschiedlichste Arten von Daten ermöglicht. Insbesondere können beispielsweise Bilddateien, Tondateien sowie Datendateien oder einzelne Datenpunkte in der einheitlichen Datenstruktur zusammengefasst werden. Die Datenstruktur kann dabei z.B. einem inspizierten oder zu inspizierenden Bauwerk 2 zugeordnet sein. Auf diese Weise kann für jedes mit der Anordnung 1 inspizierte Bauwerk 2 eine umfassende Informationssammlung in einem einfach und vielseitig zugänglichen Datenformat bereitgestellt werden. Die Datenstruktur weist bevorzugt wenigstens Daten von dreidimensionalen Bauplänen des zugeordneten Bauwerks 2 auf. Diese Daten können z.B. mit historischen Daten früherer Inspektionen angereichert sein. Ebenso können z.B. die verarbeiteten Baumaterialien der einzelnen Bauelemente abgelegt sein.

Selbstverständlich weist der Server 3 z.B. Recheneinheiten und Schnittstellen zum Datenaustausch auf, um die erforderlichen Funktionalitäten bereitzustellen. Der Server 3 ist zudem dazu ausgebildet bzw. die Programmbibliothek 5 umfasst entsprechende Programmroutinen, um die in der Datenbank abgelegten Daten bzw. die Datenstruktur in ein visuell darstellbares, dreidimensionales virtuelles Modell 9 des Bauwerks 2 abzubilden. Die Umsetzung in die visuelle Darstellung kann z.B. durch eine Client-seitige Anwendung auf einem Personalcomputer des berechtigten Benutzers 7 erfolgen. Ebenso kann die Umsetzung der visuellen Darstellung auch auf dem Server 3 erfolgen und als Bild- oder Filmdateien an den Computer des berechtigten Benutzers übertragen werden.

Das virtuelle Modell 9 ist als begehbares und interaktives virtuelles Modell 9 umgesetzt. Der berechtigte Benutzer 7 oder ein Benutzer vor Ort 10, der mit der Inspektion des Bauwerks 2 befasst ist, können somit das virtuelle Modell 9 "betreten". Der Benutzer kann dabei als reiner Beobachter im virtuellen Modell 9 vorhanden sein oder durch einen so genannten Avatar repräsentiert sein. Das Modell 9 kann hierzu Eingabemöglichkeiten aufweisen, über welche der berechtigte Benutzer 7 und/oder der Benutzer vor Ort 10 bzw. dessen Avatar(e) mit dem Modell 9 interagieren können. Beispielsweise können ausgezeichnete Stellen am virtuellen Modell 9 als aktivierbare Verweise (ähnlich den Verweisen - Hyperlinks - einer Internetseite) ausgeführt sein, welche auf weiterführende Daten verweisen. Dabei können z.B. Baudaten wie Art des verwendeten Betons, geplante Anzahl von Bewehrungen im Beton oder historische Daten früherer Inspektionen durch Interaktion aufgerufen werden.

Bevorzugt können über das Modell 9 auch Daten eingegeben werden. Insbesondere können z.B. ausgezeichnete Stellen im Modell 9 durch den berechtigten Benutzer bzw. seinen Avatar markierbar sein, an welchen z.B. von dem Benutzer vor Ort 10 Messungen durchgeführt werden sollen. Die abgespeicherten Daten und/oder die Datenstruktur können bzw. kann somit durch Interaktion mit dem Modell 9 verändert, insbesondere ergänzt werden. Weiterführende Möglichkeiten eines derartigen begehbaren dreidimensionalen virtuellen Modells 9 des zu inspizierenden Bauwerks 2 erschliessen sich unmittelbar, insbesondere im Zusammenhang mit einer Testanordnung 11, wie sie im Folgenden beschrieben ist.

Die Testanordnung 11 umfasst wenigstens eine Basiseinheit 12 sowie eine oder mehrere Messeinheiten 13. Neben der Messeinheit 13 kann die Testanordnung 11 ein Erfassungsmittel 14 zur Erfassung einer Messposition und/oder eines Messzeitpunkts umfassen, an welcher eine Messung mit der Messeinheit 13 durchgeführt wird. Weiter kann eine Markierungseinheit 15 vorhanden sein, mit welcher die Messposition einer Messung am Bauwerk 2 markiert werden kann. Zudem kann eine Makro-Aufnahmeeinheit 16 vorhanden sein, welche eine visuelle Makroaufnahme der Messposition mit ihrer unmittelbaren Umgebung erstellen kann. Bevorzugt erfolgt die Aufnahme kurz vor, während und/oder kurz nach der Messung mit der Messeinheit 13.

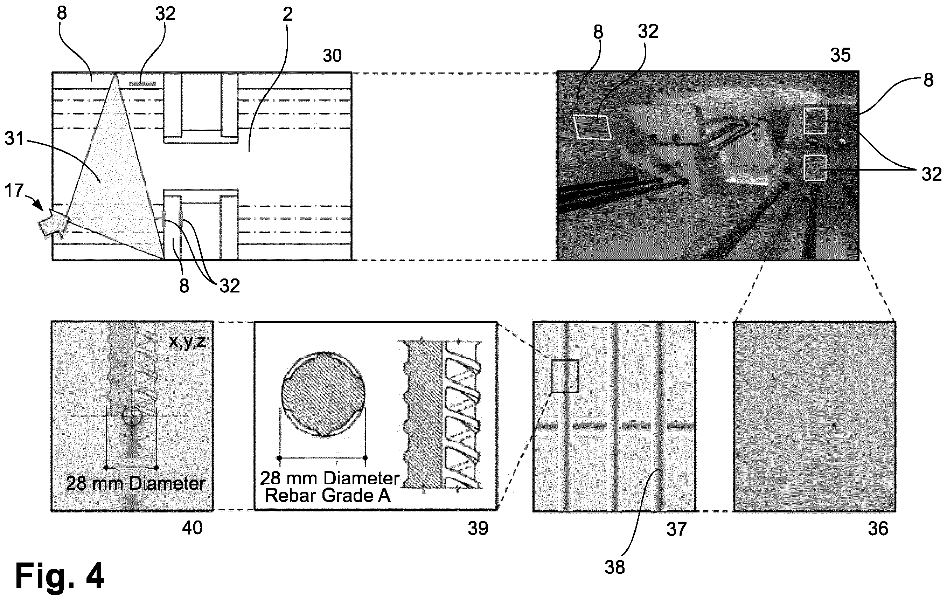

Das Erfassungsmittel 14 kann eine Aufnahmeeinheit umfassen, welche einen Abschnitt des Bauwerks 2, in welchem Messungen durchgeführt werden, zusammen mit dem Benutzer vor Ort 10 visuell erfassen kann. Eine derartige Aufnahmeeinheit kann auch, z.B. als weiteres Erfassungsmittel, als separate Aufnahmeeinheit 17 ausgebildet sein. Beispielsweise kann das Erfassungsmittel 14 in die Messeinheit 13 integriert sein und ein Triangulierungssystem umfassen, während die separate Aufnahmeeinheit 17 zur zusätzlichen visuellen Erfassung der Messpositionen dient. Die Aufnahmeeinheit 17 ist z.B. anhand von Fig. 4 näher beschrieben.

Die Messeinheit 13, das Erfassungsmittel 14, die Markierungseinheit 15, die Makroaufnahmeeinheit 16 sowie allenfalls die separate Aufnahmeeinheit 17 sind zum Datenaustausch bevorzugt über ein Netzwerk an die Basiseinheit 12 angebunden. Der Datenaustausch kann dabei automatisch und z.B. unmittelbar bei Änderungen der Datenstruktur erfolgen. Selbstverständlich können Daten während der Inspektion auch in den einzelnen Einheiten 13 bis 17 gespeichert und erst zu einem späteren Zeitpunkt auf die Basiseinheit 12 übertragen werden. Das Netzwerk kann kabelgestützt oder kabellos ausgebildet sein, wobei jeweils ein proprietäres oder öffentliches Netzwerk zum Einsatz kommen kann.

Die Basiseinheit 12 ist über ein weiteres oder dasselbe Netzwerk an den Server 3 angebunden. Die Daten der Einheiten 13 bis 17 sind somit über die Basiseinheit 12 auf den Server 3 übertragbar. Der Server 3 ergänzt die dem Bauwerk 2 zugeordnete Datenstruktur mit den übermittelten Daten. Die Ergänzungen können z.B. in Echtzeit in die Datenstruktur übernommen werden. Ebenso kann das aus der Datenstruktur erzeugte virtuelle Modell 9 in Echtzeit mit den Ergänzungen versehen werden. Auf diese Weise kann ein Benutzer 7 oder 10 in Echtzeit z.B. über eine vorgenommene Messung informiert werden. Selbstverständlich können z.B. auch vom Server 3 über die Basseinheit 12 Daten z.B. an die Messeinheit 13 übertragen werden. Derartige Daten können z.B. eine von einem berechtigten Benutzer 7 erzeugte Messanweisung umfassen, welche dem Benutzer vor Ort 10 auf einen Display der Basiseinheit 12 und/oder der Messeinheit 13 angezeigt werden.

Ein exemplarischer Ablauf ist wie folgt:
Der Benutzer vor Ort 10 führt infolge der Messanweisung die Messung durch, wobei er z.B. von der Aufnahmeeinheit 17 erfasst wird. Die so gewonnen Daten - wie z.B. Messwerte der Messeinheit 13, vom Erfassungsmittel 14 erfasste Messpositionen, Übersichtsaufnahmen der Aufnahmeeinheit 17 mit dem Benutzer vor Ort 10 bei der Durchführung der Messung und/oder Makroaufnahmen der Makro-Aufnahmeeinheit 16 - können an den Server 3 übermittelt werden. Dieser ergänzt die Datenstruktur und erzeugt gegebenenfalls ein ergänztes virtuelles Modell 9. Der berechtigte Benutzer 7 kann somit auf die ergänzten Daten zugreifen und diese z.B. auf Qualität und/oder Vollständigkeit prüfen.

Die Testanordnung 11 kann auch wenigstens eine Überwachungseinheit 18 umfassen, welche z.B. fest am Bauwerk 2 angeordnet ist. Die Überwachungseinheit 18 ist an den Server 3 und/oder die Basiseinheit 12 angebunden. Die Überwachungseinheit 18 kann wie die Messeinheit 13 Messwerte von Bauelementen des Bauwerks 2 aufnehmen. Im Gegensatz zur Messeinheit 13 ist die Überwachungseinheit 18 jedoch in diesem Ausführungsbeispiel als stationäre Einheit zur laufenden Übermittelung von Messwerten ausgebildet.

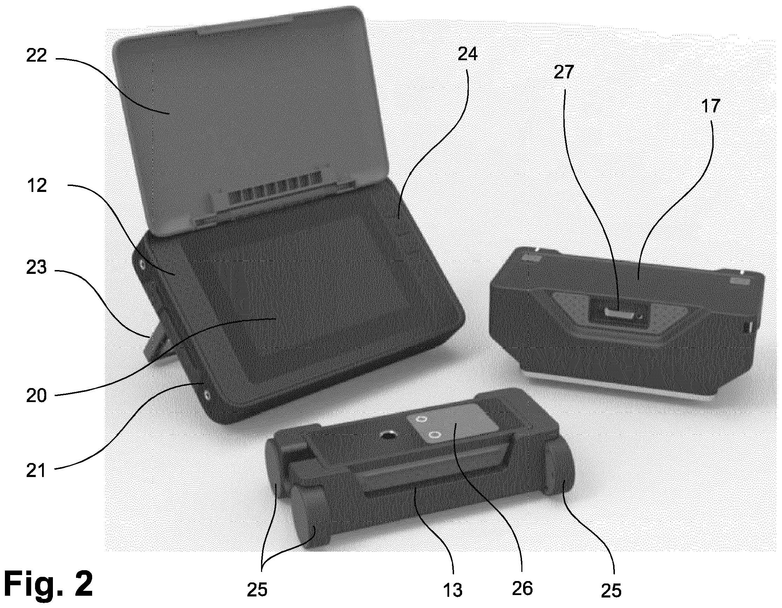

Figur 2 zeigt exemplarische Ausführungsformen der Basiseinheit 12 sowie eines als separate Aufnahmeeinheit 17 ausgebildeten Erfassungsmittels und einer Messeinheit 13. Die Messeinheit 13 wird im Folgenden exemplarisch anhand eines Bewehrungsprüfgeräts basierend auf einer Wirbelstromtechnologie beschrieben.

Die Basiseinheit 12 weist einen Bildschirm 20 auf, welcher vorliegend berührungsempfindlich zur Eingabe von Daten ausgebildet ist. Die Basiseinheit 12 weist ein Schutzgehäuse 21 mit einem Deckel 22 auf, mit welchem der Bildschirm 20 geschützt werden kann. Am Schutzgehäuse 21 können zudem Mittel 23 zur Positionierung der Basiseinheit 12 in einer gewünschten Lage ausgebildet sein. Die Basiseinheit 12 kann im Wesentlichen wie ein robuster Laptop- oder Tablet-Computer ausgebildet sein, wie er auch für den Einsatz im Feld zur Anwendung kommt. Die Basiseinheit 12 kann zudem ein Tastenfeld 24 aufweisen, mit welchem Eingaben gemacht werden können.

Die Messeinheit 13 weist eine hier nicht erkennbare Messvorrichtung auf, welche zur Durchführung der jeweils zur Anwendung kommenden Messmethode ausgebildet sind. Vorliegend sind dies exemplarisch Spulen zur Durchführung einer Wirbelstrom-basierten Bewehrungsprüfung in z.B. Stahlbeton. Die Messeinheit 13 umfasst einen ebenfalls berührungsempfindlichen Bildschirm 26 zur Darstellung und Eingabe von Daten.

Ferner enthält die Messeinheit 13 vier Räder 25, welche während der Messung auf einer Oberfläche des inspizierten Objekts entlang gerollt werden können. Eines der Räder 25 enthält einen hier nicht erkennbaren Magneten, dessen Bewegung induktiv festgestellt werden kann. Auf diese Weise kann besonders präzise die Trajektorie bestimmt werden, entlang welcher die Messeinheit 13 über die Oberfläche des Objekts geführt wird.

Die Aufnahmeeinheit 17 weist eine Kamera 27 auf, welche ein vergleichsweise grosses Blickfeld aufweist, sodass ein Bereich des Bauwerks 2 in einer Übersichtsansicht 35 erfassbar ist (siehe z.B. Fig. 4). Erforderlichenfalls kann die Kamera 27 ein Weitwinkelobjektiv oder ein Fischauge umfassen. Die Kamera 27 kann auch als Panoramakamera ausgebildet sein.

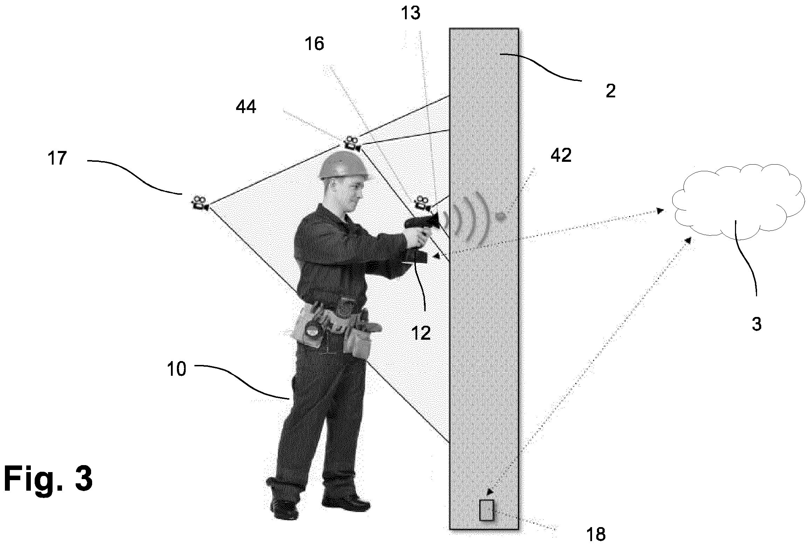

In Figur 3 ist schematisch dargestellt, wie ein Benutzer vor Ort 10 eine Messung vornehmen kann. Mit Hilfe einer mobilen Messeinheit 13 kann er einen Messwert des Objekts 2 bestimmen. Dieser Messwert wird durch einen Defekt 42 beeinflusst und kann somit einen Aufschluss über das Vorliegen des Defekts 42 geben. Die Messeinheit 13 ist über eine Schnittstelle zum Datenaustausch mit einer Basiseinheit 12 verbunden, in welcher von der Messeinheit 13 übermittelte Datensätze speicherbar sind. Die Basiseinheit 12 weist ferner eine Schnittstelle zum Datenaustausch mit einem proprietären oder öffentlichen Netzwerk 3 auf. Alternativ kann die Schnittstelle der Basiseinheit 12 auch zum direkten Datenaustausch mit einem Server ausgebildet sein. An der Messeinheit 13 ist eine Makro-Aufnahmeeinheit in Form einer Kamera 16 angeordnet, mit deren Hilfe die genaue Messposition festgehalten werden kann. Eine weitere, am Helm des Benutzers vor Ort 10 angeordnete Kamera 44 erfasst im Wesentlichen das Blickfeld des Benutzers vor Ort 10. Das Blickfeld einer weiteren Kamera 17 erfasst den Benutzer vor Ort 10 während der Messung. Am Objekt 2 ist eine Überwachungseinheit 18 befestigt, die beispielsweise als Feuchtigkeitssensor oder als Temperatursensor ausgebildet sein kann. Auch die Überwachungseinheit 18 weist eine Schnittstelle zum Datenaustausch mit dem Netzwerk 3 auf.

Figur 4 zeigt eine Ansicht 30, wie sie z.B. mit einer Programmroutine der Programmbibliothek 5 aus der dem Bauwerk 2 zugeordneten Datenstruktur oder aus dem virtuellen Modell 9 erzeugbar ist. Die Ansicht 30 zeigt eine zweidimensionale Draufsicht auf einen Abschnitt des Bauwerks 2. In der Ansicht 30 sind eine gewünschte Position sowie eine gewünschte Blickrichtung und Blickwinkel 31 der Aufnahmeeinheit 17 angezeigt. Zudem sind an verschiedenen Bauelementen 8 des Bauwerks 2 im Blickfeld der Aufnahmeeinheit 17 Messpositionen 32 markiert. Die Ansicht 30 kann somit als Messanweisung für den Benutzer vor Ort 10 angesehen werden. Selbstverständlich kann Ansicht 30 auch eine Situation dieses Bereichs nach erfolgter Messung zeigen, wobei die markierten Messpositionen 32 in diesem Fall z.B. als aktivierbare Verweise ausgebildet sein können, über welche z.B. auf die Messwerte der Messungen zugegriffen werden kann.

Ansicht 35 der Fig. 4 zeigt das Blickfeld der Aufnahmeeinheit 17 mit den eingeblendeten Messpositionen 32 der Bauelemente 8. Die Ansicht 35 kann dabei z.B. als dreidimensionale Ansicht des bereits ergänzten virtuellen Modells 9 verstanden werden. Ebenso kann die Ansicht 35 als dreidimensionale Ansicht einer Messanweisung an den Benutzer vor Ort 10 angesehen werden, welche z.B. auf der Basiseinheit 12 oder der Messeinheit 13 dargestellt werden kann. Der Benutzer vor Ort 10 wird in diesem Fall darüber informiert, wo er die Messungen durchzuführen hat. Eine Farbe der markierten Messpositionen 32 kann dabei z.B. die gewünschte Art der Messung anzeigen.

Ansicht 36 zeigt eine Makroaufnahme der unmittelbaren Umgebung einer der Messpositionen 32, wie sie von der Makro-Aufnahmeeinheit 16 aufgenommen wird. Die Makroaufnahme kann z.B. durch Mausklick oder andere Interaktion mit der entsprechenden Messposition 32 im virtuellen Modell 9 aufgerufen werden.

Ansicht 37 zeigt eine visuelle Darstellung von ermittelten Messwerten. Die Messeinheit 13 hat durch eine oder mehrere Messungen z.B. die Lagen sowie einen Zustand von Bewehrungen 38 im Bauelement 8 ermittelt. Durch die Basiseinheit 12 oder den Server 3 wurden die Messwerte in eine visuelle Darstellung der Rohdaten verarbeitet. Die visuelle Darstellung kann z.B. durch Mausklick oder andere Interaktion auf die entsprechende Messposition 32 im virtuellen Modell 9 aufgerufen werden.

Ansicht 39 zeigt detaillierte Informationen zu einem Ausschnitt der Ansicht 37. Die dargestellten Informationen können z.B. zusätzliche Informationen aus einer Bibliothek zu den verwendeten Baumaterialien umfassen oder z.B. aus den Messwerten der Messeinheit 13 rechnerisch erzeugt worden sein.

Ansicht 40 zeigt schliesslich eine überlagerte Ansicht gemäss Ansichten 36, 37 und 39, wie sie im virtuellen Modell 9 dargestellt werden kann. Zusätzlich können die z.B. vom Erfassungsmittel 14 ermittelten genauen Ortskoordinaten der Messposition eingeblendet sein (X, Y, Z).

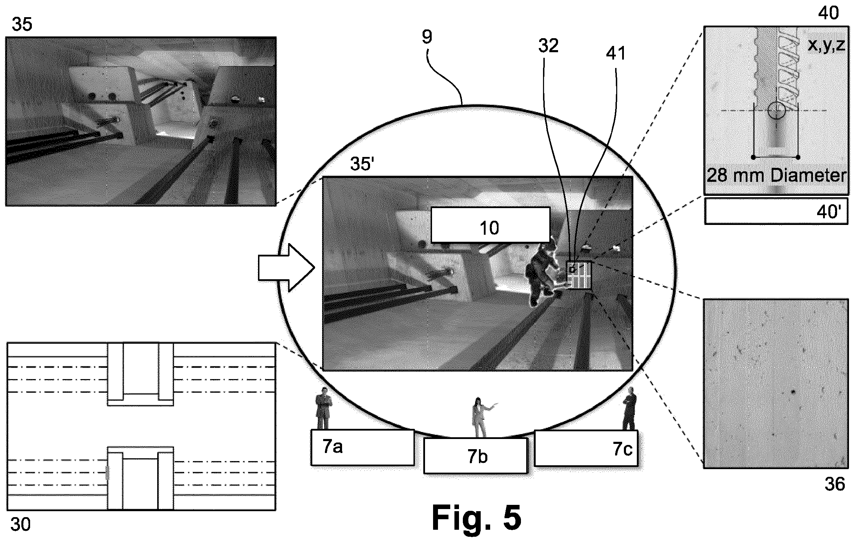

Figur 5 zeigt schematische Ansichten, wie das ergänzte virtuelle Modell 9 nach der Durchführung einer Inspektion durch den Benutzer vor Ort 10 dargestellt werden kann. Die ermittelten Messwerte sowie weitere Daten wurden in das ergänzte Modell 9 aufgenommen (Pfeil). Auf dem Server 3 kann von berechtigten Benutzern 7 eine dreidimensionale Darstellung 35' des ergänzten Modells 9 abgerufen werden. Die berechtigten Benutzer 7 können dabei z.B. ein Service-Fachmann 7a, ein Inhaber 7b des Bauwerks 2 oder ein Mitarbeiter 7c der Inspektionsfirma sein.

Die Ansicht 35', welche dem Blickfeld der Aufnahmeeinheit 17 der Ansicht 35 entspricht, zeigt den Benutzer vor Ort 10 bei der Durchführung der Messung. Die Messposition 32 ist markiert und kann als interaktiver Verweis 41 ausgebildet sein. Über den Verweis 41 kann eine Vielzahl von damit verknüpften Informationen abrufbar sein. Beispielsweise kann die Ansicht 36 der Makro-Aufnahmeeinheit 16 abgerufen werden. Ebenso kann die zusammengesetzte Ansicht 40 aufgerufen werden. Selbstverständlich kann die Messposition 32 der Ansicht 35' z.B. direkt als zusammengesetzte Ansicht 40 dargestellt sein.

Sämtliche Ansichten können selbstverständlich mit Textfeldern 40' ergänzt sein, in welchen z.B. Details zur Messung wie Zeitpunkt oder Art der Messung angezeigt werden können. Ebenso kann das Ergebnis einer Analyse der Messwerte angezeigt werden wie z.B. "Korrosion 10%". Selbstverständlich können auch die ergänzten Daten wie z.B. der Blickwinkel 31 der Aufnahmeeinheit 17 der Ansicht 35 und/oder die zweidimensionale Darstellung gemäss der Ansicht 30 aus dem Modell 9 entnommen werden. Ebenso kann auf weitere Daten der Datenstruktur zugegriffen werden, welche z.B. Aufschluss über die zu erfüllenden Normen des Bauelements 8 geben oder frühere Inspektionsdaten betreffen.

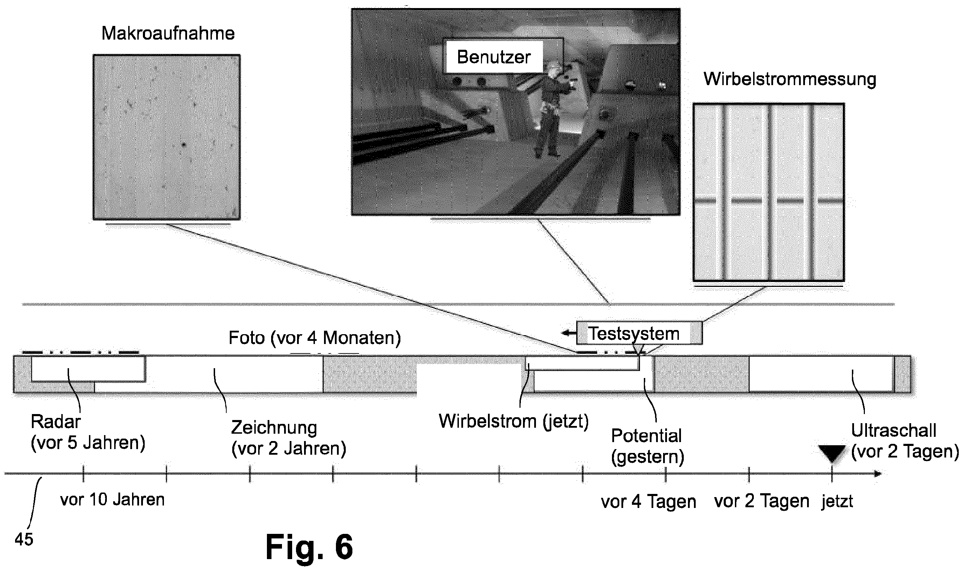

In Figur 6 ist eine auf einem Bildschirm dargestellte visuelle Wiedergabe dargestellt, die einen Zeitstrahl 45 enthält. Entlang des Zeitstrahls 45 ist die Historie einer Vielzahl von Messungen dargestellt. Die einzelnen Messungen sind markiert und als Verweise ausgebildet, sodass bei entsprechender Aktion des Benutzers die gewünschten Informationen zu einem internen Zustand und/oder einer internen Struktur abgerufen werden können, so wie dies in Figur 6 beispielhaft für eine am gleichen Tag erfolgte Wirbelstrommessung dargestellt ist.

## Patentansprüche

1. Anordnung (1) zur Inspektion eines Objekts (2), insbesondere eines Bauwerks (2), umfassend
- eine mobile Messeinheit (13) zur Ermittlung eines dem Objekt (2) zugeordneten Messwerts durch einen Benutzer vor Ort (10) wobei die Messeinheit (13) eine Schnittstelle zum Datenaustausch mit weiteren Einheiten (12, 14 - 17) der Anordnung (1), insbesondere einer Basiseinheit (3; 12), aufweist,
- eine, insbesondere mobile, Basiseinheit (3; 12), in welcher von der Messeinheit (13) übermittelte Datensätze speicherbar und bevorzugt visuell darstellbar sind und welche eine Schnittstelle zum Datenaustausch mit weiteren Einheiten (13-17) der Anordnung (1), insbesondere wenigstens der mobilen Messeinheit (13), und einem proprietären oder öffentlichen Netzwerk, aufweist,
- ein Erfassungsmittel (14) zum Erfassen einer Messposition (32), an welcher der Messwert ermittelt wird,
wobei ein von der Messeinheit (13) ermittelter Messwert zumindest zusammen mit einer vom Erfassungsmittel (14) erfassten Messposition, vorzugsweise automatisch, als Datensatz an die Basiseinheit (3; 12) übermittelbar ist, und wobei die mobile Messeinheit (13) zur zerstörungsfreien Ermittlung von Messwerten zu einer internen Struktur und/oder einem internen Zustand von, insbesondere unzugänglichen, Elementen (8) des Objekts (2), insbesondere Bauelementen (8) des Bauwerks (2), ausgebildet ist, wobei die Schnittstelle der Basiseinheit (12) zur Anbindung an ein öffentliches oder proprietäres externes Netzwerk ausgebildet ist und die Anordnung (1) einen Server (3) umfasst, an welchen die Basiseinheit (12) zum Datenaustausch über das öffentliche oder proprietäre Netzwerk angebunden oder anbindbar ist, wobei der Server (3) für einen berechtigten Benutzer (7) über ein, bevorzugt öffentliches, Netzwerk zugänglich ist, wobei der Server (3) wenigstens eine abgespeicherte Datenstruktur umfasst, welche dem zu inspizierenden Objekt (2) zugeordnet ist, wobei der Server (3) dazu ausgebildet ist, die Datenstruktur mit von der Basiseinheit (12) übermittelten Daten zu ergänzen und dem Benutzer vor Ort bereitzustellen, wobei der Server (3) dazu ausgebildet ist, dem Benutzer vor Ort ein virtuell begehbares dreidimensionales Modell (9) des zu inspizierenden Objekts (2), insbesondere in Echtzeit, bereitzustellen, wobei die Datenstruktur sowie das darauf basierende virtuelle Modell (9) vom Server laufend mit den von der Basiseinheit (12) übermittelten Daten zu internen Strukturen und/oder einem internen Zustand der Bauelemente des Objektes anreicherbar ist, wobei eine Interaktion des Benutzers vor Ort mit dem virtuellen Modell (9) erzielbar ist, wobei im virtuellen Modell (9) die internen Strukturen durch halbtransparente Wände hindurch sichtbar dargestellt sind, **dadurch gekennzeichnet, dass** die Messpositionen im virtuellen Modell (9) markierbar und als Verweis ausbildbar sind, sodass bei entsprechender Aktion des Benutzers die gewünschten Informationen zu einem internen Zustand und/oder einer internen Struktur abrufbar ist.

2. Anordnung (1) gemäss Anspruch 1, **dadurch gekennzeichnet, dass** das virtuelle Modell (9) auf der Basiseinheit (12) und/oder auf der Messeinheit (13) und/oder auf einem Head-up-Display, insbesondere einem Head-up-Display einer Brille, darstellbar sein.

3. Anordnung (1) gemäss einem der vorhergehenden Ansprüche, **dadurch gekennzeichnet, dass** das Erfassungsmittel (14) eine insbesondere mobile Aufnahmeeinheit (17) umfasst, welche derart ausgebildet und vor der Ermittlung des Messwerts bei einer Messposition (32) positionierbar ist, dass die Ermittlung des Messwertes, insbesondere durch den Benutzer vor Ort, mittels der mobilen Messeinheit (13) durch die Aufnahmevorrichtung (17) fotografisch und/oder filmisch aufnehmbar ist.

4. Anordnung (1) gemäss Anspruch 3, **dadurch gekennzeichnet, dass** mit der insbesondere mobilen Aufnahmeeinheit (17) zumindest ein Blickfeld erfassbar ist, welches wenigstens die mobile Messeinheit (13) und/oder den Benutzer vor Ort (10) bei der Ermittlung des Messwerts und eine Umgebung der Messposition (32) erfasst.

5. Anordnung (1) gemäss einem der vorangehenden Ansprüche, **dadurch gekennzeichnet, dass** eine Markierungseinheit (15) vorhanden ist, mit welcher die Messposition am Objekt (2) markierbar ist, wobei vorzugsweise die Markierungseinheit (15) in die Messeinheit (13) integriert ist, sodass die Messposition (32) bei der Ermittlung des Messwerts markierbar ist.

6. Anordnung (1) gemäss einem der vorangehenden Ansprüche, **dadurch gekennzeichnet, dass** eine Makro-Aufnahmeeinheit (16) vorhanden ist, mit welcher eine unmittelbare Umgebung der Messposition (32) fotografisch und/oder filmisch aufnehmbar ist, wobei vorzugsweise die Makro-Aufnahmeeinheit (16) in die Messeinheit (13) integriert ist, sodass die unmittelbare Umgebung der Messposition (32) bei der Ermittlung des Messwerts aufnehmbar ist.

7. Anordnung (1) gemäss einem der vorhergehenden Ansprüche, **dadurch gekennzeichnet, dass** die Datenstruktur vom Server mit Daten oder Datensätzen der Basiseinheit umfassend Messwerte der Messeinheit ergänzt ist.

8. Anordnung (1) gemäss einem der vorhergehenden Ansprüche, **dadurch gekennzeichnet, dass** die Anordnung (1), insbesondere die mobile Messeinheit (13) oder die Makro-Aufnahmeeinheit (16), derart programmiert ist, dass die Messung oder die Aufnahme automatisch dann erfolgt, wenn die vorgegebene Messposition erreicht ist.

9. Anordnung (1) nach einem der vorhergehenden Ansprüche, **dadurch gekennzeichnet, dass** die Messeinheit (13) und die Basiseinheit (12) zusammen ein integriertes Gerät bilden.

10. Verfahren zur Inspektion eines Objekts (2), insbesondere eines Bauwerks (2), insbesondere zur Durchführung mit einer Anordnung (1) gemäss einem der vorangehenden Ansprüche, umfassend die Schritte:
- zerstörungsfreie Ermittlung eines Messwerts zu einer internen Struktur und/oder einem internen Zustand von, insbesondere unzugänglichen, Bauelementen (8) des Objekts (2) durch eine mobile Messeinheit (13), wobei die Messeinheit (13) von einem Benutzer bedient wird,
- Erfassen einer Messposition (32), an welchem der Messwert ermittelt wird, und/oder eines Messzeitpunkts, zu welchem der Messwert ermittelt wird, mit einem Erfassungsmittel (14),
- insbesondere automatisches, Übermitteln des von der Messeinheit (13) ermittelten Messwerts zumindest zusammen mit der/m vom Erfassungsmittel (14) erfassten Messposition und/oder Messzeitpunkt als Datensatz über eine Datenschnittstelle an eine Basiseinheit (3; 12),
- Speichern des Datensatzes in der Basiseinheit (3; 12),
- Übermitteln eines Datensatzes von der Basiseinheit (12) an einen Server (3), insbesondere umfassend Messwerte zu einer internen Struktur und/oder einem internen Zustand von, insbesondere unzugänglichen, Bauelementen (8), vorzugsweise über ein öffentliches oder proprietäres Netzwerk, wobei der Server (3) wenigstens eine abgespeicherte Datenstruktur umfasst, welche dem zu inspizierenden Objekt (2) zugeordnet ist,
- Ergänzen der Datenstruktur mit dem von der Basiseinheit (12) übermittelten Datensatz,
- Bereitstellen, insbesondere in Echtzeit, der Datenstruktur, insbesondere auf dem Server (3), für einen Benutzer vor Ort,
- wobei das Bereitstellen der Datenstruktur als virtuelles dreidimensionales Modell (9) des zu inspizierenden Objekts (2) erfolgt, wobei die Datenstruktur sowie das darauf basierende virtuelle Modell vom Server laufend mit den von der Basiseinheit (12) übermittelten Daten zu internen Strukturen und/oder einem internen Zustand der Bauelemente des Objektes angereichert wird, wobei der Benutzers vor Ort mit dem virtuellen Modell (9) interagiert, wobei im virtuellen Modell (9) die internen Strukturen durch halbtransparente Wände hindurch sichtbar dargestellt werden, wobei die Messpositionen im virtuellen Modell (9) markiert werden und als Verweis ausgebildet sind, sodass bei entsprechender Aktion des Benutzers die gewünschten Informationen zu einem internen Zustand und/oder einer internen Struktur abrufbar ist.

11. Verfahren gemäss Anspruch 10, **dadurch gekennzeichnet, dass** ein Blickfeld erfasst wird, welches wenigstens die mobile Messeinheit (13) und/oder den Benutzer vor Ort (10) bei der Ermittlung des Messwerts und eine Umgebung der Messposition (32) erfasst, wobei die Erfassung insbesondere mit der Aufnahmeeinheit (17) erfolgt.

12. Verfahren gemäss einem der Ansprüche 10 bis 11, **dadurch gekennzeichnet, dass** die Messposition am Objekt (2) markiert wird, insbesondere mit einer Markierungseinheit (15).

13. Verfahren gemäss einem der Ansprüche 10 - 12, **dadurch gekennzeichnet, dass** eine unmittelbare Umgebung der Messposition (32) fotografisch und/oder filmisch aufgenommen wird, insbesondere mittels einer Makro-Aufnahmeeinheit (16).

14. Verfahren gemäss einem der Ansprüche 10 - 13, **dadurch gekennzeichnet, dass** eine Messung oder eine Aufnahme automatisch dann erfolgt, wenn eine vorgegebene Messposition erreicht ist.

## Claims

1. Arrangement (1) for inspecting an object (2), in particular a structure (2), comprising
a mobile measuring unit (13) for determining a measured value assigned to the object (2) by a user on site (10), the measuring unit (13) having an interface for exchanging data with further units (12, 14-17) of the arrangement (1), in particular a base unit (3; 12),
a, in particular mobile, base unit (3; 12) in which data records transmitted by the measuring unit (13) can be stored and preferably visually displayed and which has an interface for data exchange with further units (13-17) of the arrangement (1), in particular at least the mobile measuring unit (13), and a proprietary or public network,
a detection means (14) for detecting a measurement position (32) at which the measured value is determined, wherein a measured value determined by the measuring unit (13) at least together with a measuring position detected by the detection means (14) can be transmitted, preferably automatically, as a data record to the base unit (3; 12), and wherein the mobile measuring unit (13) is designed for the non-destructive determination of measured values relating to an internal structure and/or an internal state of, in particular inaccessible, elements (8) of the object (2), in particular structural elements (8) of the structure (2), wherein the interface of the base unit (12) is designed for connection to a public or proprietary external network and the arrangement (1) comprises a server (3), to which the base unit (12) is connected or can be connected for data exchange via the public or proprietary network, wherein the server (3) is accessible to an authorised user (7) via a, preferably public, network, wherein the server (3) comprises at least one stored data structure which is assigned to the object (2) to be inspected, wherein the server (3) is designed to supplement the data structure with data transmitted by the base unit (12) and to make it available to the user on site, wherein the server (3) is designed to provide the user on site with a virtually accessible three-dimensional model (9) of the object (2) to be inspected, in particular in real time, wherein the data structure as well as the virtual model (9) based thereon can be continuously enriched by the server with the data transmitted by the base unit (12) on internal structures and/or an internal state of the components of the measuring unit (13) of the object, wherein an interaction of the user on site with the virtual model (9) is achievable, wherein the internal structures are visibly represented in the virtual model (9) through semi-transparent walls, **characterised in that** the measurement positions in the virtual model (9) can be marked and formed as a reference, so that the desired information on an internal state and/or an internal structure can be retrieved upon corresponding action of the user.

2. Arrangement (1) according to claim 1, **characterised in that** the virtual model (9) can be displayed on the base unit (12) and/or on the measuring unit (13) and/or on a head-up display, in particular a head-up display of a pair of glasses.

3. Arrangement (1) according to one of the preceding claims, **characterised in that** the detection means (14) comprises a recording unit (17), in particular a mobile recording unit, which is designed in such a way and can be positioned at a measuring position (32) before the measured value is determined that the determination of the measured value, in particular by the user on site, can be recorded photographically and/or on film by means of the mobile measuring unit (13) by the recording device (17).

4. Arrangement (1) according to claim 3, **characterised in that** the recording unit (17), in particular the mobile recording unit, can be used to record at least one field of view which records at least the mobile measuring unit (13) and/or the user on site (10) during the determination of the measured value and an environment of the measuring position (32).

5. Arrangement (1) according to one of the preceding claims, **characterised in that** a marking unit (15) is present, with which the measuring position on the object (2) can be marked, the marking unit (15) preferably being integrated into the measuring unit (13), so that the measuring position (32) can be marked when the measured value is determined.

6. Arrangement (1) according to one of the preceding claims, **characterised in that** a macro-recording unit (16) is present, with which an immediate environment of the measuring position (32) can be recorded photographically and/or on film, preferably the macro-recording unit (16) being integrated into the measuring unit (13), so that the immediate environment of the measuring position (32) can be recorded when the measured value is determined.

7. Arrangement (1) according to one of the preceding claims, **characterised in that** the data structure is supplemented by the server with data or data records of the base unit comprising measured values of the measuring unit.

8. Arrangement (1) according to one of the preceding claims, **characterised in that** the arrangement (1), in particular the mobile measuring unit (13) or the macro-recording unit (16), is programmed in such a way that the measurement or the recording takes place automatically when the predetermined measuring position is reached.

9. Arrangement (1) according to one of the preceding claims, **characterised in that** the measuring unit (13) and the construction unit (12) together form an integrated device.

10. Method for inspecting an object (2), in particular a building (2), in particular for carrying out with an arrangement (1) according to one of the preceding claims, comprising the steps of non-destructive determination of a measured value for an internal structure and/or an internal state of, in particular inaccessible, components (8) of the object (2) by a mobile measuring unit (13), wherein the measuring unit (13) is operated by a user, detecting a measuring position (32) at which the measured value is determined and/or a measuring time at which the measured value is determined, using a detection means (14), in particular automatic transmission of the measured value determined by the measuring unit (13) at least together with the measuring position and/or measuring time recorded by the recording means (14) as a data record via a data interface to a base unit (3; 12), Storing the data set in the base unit (3; 12), transmitting a data record from the base unit (12) to a server (3), in particular comprising measured values relating to an internal structure and/or an internal state of, in particular inaccessible, components (8), preferably via a public or proprietary network, wherein the server (3) comprises at least one stored data structure which is assigned to the object (2) to be inspected, supplementing the data structure with the data set transmitted by the base unit (12), providing, in particular in real time, the data structure, in particular on the server (3), to a user on site, the data structure being provided as a virtual three-dimensional model (9) of the object (2) to be inspected, the data structure and the virtual model based thereon being continuously enriched by the server with the data transmitted by the base unit (12) relating to internal structures and/or an internal state of the components of the measuring unit (13 of the object), wherein the user interacts with the virtual model (9) on site, wherein the internal structures are displayed visibly through semi-transparent walls in the virtual model (9), wherein the measurement positions are marked in the virtual model (9) and are designed as a reference, so that the desired information on an internal state and/or an internal structure can be called up when the user acts accordingly.

11. Method according to claim 101, **characterised in that** a field of view is detected which detects at least the mobile measuring unit (13) and/or the user on site (10) during the determination of the measured value and an environment of the measuring position (32), the detection being carried out in particular with the recording unit (17).

12. Method according to one of claims 101 to 112, **characterised in that** the measurement position on the object (2) is marked, in particular with a marking unit (15).

13. Method according to one of claims 101 - 123, **characterised in that** an immediate environment of the measuring position (32) is recorded photographically and/or on film, in particular by means of a macro recording unit (16).

14. Method according to one of claims 101 - 134, **characterised in that** a measurement or a recording is carried out automatically when a predetermined measuring position is reached.

## Revendications

1. Dispositif (1) pour l'inspection d'un objet (2), en particulier d'un bâtiment (2), comprenant
- une unité de mesure mobile (13) pour déterminer une valeur de mesure associée à l'objet (2) par un utilisateur sur place (10), l'unité de mesure (13) présentant une interface pour l'échange de données avec d'autres unités (12, 14 - 17) de l'agencement (1), en particulier une unité de base (3 ; 12),
- une unité de base (3 ; 12), en particulier mobile, dans laquelle des ensembles de données transmis par l'unité de mesure (13) peuvent être mémorisés et de préférence représentés visuellement, et qui présente une interface pour l'échange de données avec d'autres unités (13-17) du dispositif (1), en particulier au moins l'unité de mesure mobile (13), et un réseau propriétaire ou public,
- un moyen de détection (14) pour détecter une position de mesure (32), à laquelle la valeur de mesure est déterminée, une valeur de mesure déterminée par l'unité de mesure (13) étant transmise, au moins en même temps qu'une position de mesure détectée par le moyen de détection (14), de préférence automatiquement, à l'unité de base (3 ; 12), et l'unité de mesure mobile (13) étant conçue pour la détermination non destructive de valeurs de mesure concernant une structure interne et/ou un état interne d'éléments (8), en particulier inaccessibles, de l'objet (2), en particulier d'éléments de construction (8) de l'ouvrage (2), l'interface de l'unité de base (12) étant conçue pour la connexion à un réseau externe public ou propriétaire et l'agencement (1) comprenant un serveur (3), auquel l'unité de base (12) est reliée ou peut être reliée pour l'échange de données via le réseau public ou propriétaire, le serveur (3) étant accessible à un utilisateur autorisé (7) via un réseau, de préférence public, le serveur (3) comprenant au moins une structure de données mémorisée qui est associée à l'objet (2) à inspecter, le serveur (3) étant conçu pour compléter la structure de données avec des données transmises par l'unité de base (12) et pour la mettre à disposition de l'utilisateur sur place, le serveur (3) étant conçu pour mettre à la disposition de l'utilisateur sur place un modèle tridimensionnel (9) virtuellement praticable de l'objet (2) à inspecter, en particulier en temps réel, la structure de données ainsi que le modèle virtuel (9) basé sur celle-ci pouvant être enrichis en permanence par le serveur avec les données transmises par l'unité de base (12) concernant des structures internes et/ou un état interne des éléments de construction de l'unité de mesure (13) de l'objet, une interaction de l'utilisateur sur place avec le modèle virtuel (9) pouvant être obtenue, les structures internes étant représentées dans le modèle virtuel (9) de manière visible à travers des parois semi-transparentes, **caractérisé en ce que** les positions de mesure peuvent être marquées dans le modèle virtuel (9) et être représentées sous forme de référence, de sorte que, en cas d'action correspondante de l'utilisateur, les informations souhaitées concernant un état interne et/ou une structure interne peuvent être appelées.

2. Dispositif (1) selon la revendication 1, **caractérisé en ce que** le modèle virtuel (9) peut être représenté sur l'unité de base (12) et/ou sur l'unité de mesure (13) et/ou sur un affichage tête haute, en particulier un affichage tête haute d'une paire de lunettes.

3. Dispositif (1) selon l'une des revendications précédentes, **caractérisé en ce que** le moyen de détection (14) comprend une unité de prise de vue (17), en particulier mobile, qui est conçue et peut être positionnée à une position de mesure (32) avant la détermination de la valeur de mesure, de sorte que la détermination de la valeur de mesure, en particulier par l'utilisateur sur place, peut être photographiée et/ou filmée par le dispositif de prise de vue (17) au moyen de l'unité de mesure mobile (13).

4. Dispositif (1) selon la revendication 3, **caractérisé en ce que** l'unité d'enregistrement (17), en particulier mobile, permet de saisir au moins un champ de vision qui couvre au moins l'unité de mesure mobile (13) et/ou l'utilisateur sur place (10) lors de la détermination de la valeur de mesure et un environnement de la position de mesure (32).

5. Dispositif (1) selon l'une des revendications précédentes, **caractérisé en ce qu'**il existe une unité de marquage (15) avec laquelle la position de mesure peut être marquée sur l'objet (2), l'unité de marquage (15) étant de préférence intégrée dans l'unité de mesure (13), de sorte que la position de mesure (32) peut être marquée lors de la détermination de la valeur de mesure.

6. Dispositif (1) selon l'une des revendications précédentes, **caractérisé en ce qu'**il existe une unité de prise de vue macro (16) avec laquelle un environnement immédiat de la position de mesure (32) peut être photographié et/ou filmé, l'unité de prise de vue macro (16) étant de préférence intégrée dans l'unité de mesure (13), de sorte que l'environnement immédiat de la position de mesure (32) peut être photographié lors de la détermination de la valeur de mesure.

7. Dispositif (1) selon l'une des revendications précédentes, **caractérisé en ce que** la structure de données du serveur est complétée par des données ou des ensembles de données de l'unité de base comprenant des valeurs de mesure de l'unité de mesure.

8. Dispositif (1) selon l'une des revendications précédentes, **caractérisé en ce que** le dispositif (1), en particulier l'unité de mesure mobile (13) ou l'unité d'enregistrement macro (16), est programmé de telle sorte que la mesure ou l'enregistrement s'effectue automatiquement lorsque la position de mesure prédéfinie est atteinte.

9. Dispositif (1) selon l'une des revendications précédentes, **caractérisé en ce que** l'unité de mesure (13) et l'unité de base (12) forment ensemble un appareil intégré.

10. Procédé d'inspection d'un objet (2), notamment d'un bâtiment (2), en particulier pour la mise en œuvre avec un dispositif (1) selon l'une des revendications précédentes, comprenant les étapes suivantes :
- Détermination non destructive d'une valeur de mesure concernant une structure interne et/ou un état interne d'éléments de construction (8), en particulier inaccessibles, de l'objet (2) par une unité de mesure mobile (13), l'unité de mesure (13) étant manipulée par un utilisateur,
- Détection d'une position de mesure (32), à laquelle la valeur de mesure est déterminée, et/ou d'un moment de mesure, auquel la valeur de mesure est déterminée, avec un moyen de détection (14),
- Transmission, en particulier automatique, de la valeur de mesure déterminée par l'unité de mesure (13), au moins en même temps que la position de mesure et/ou l'instant de mesure saisi(e) par le moyen de saisie (14), en tant que jeu de données à une unité de base (3 ; 12) par l'intermédiaire d'une interface de données,
- Enregistrement de l'ensemble de données dans l'unité de base (3 ; 12),
- Transmission d'un jeu de données de l'unité de base (12) à un serveur (3), comprenant notamment des valeurs de mesure relatives à une structure interne et/ou à un état interne de composants (8), notamment inaccessibles, de préférence par l'intermédiaire d'un réseau public ou propriétaire, le serveur (3) comprenant au moins une structure de données mémorisée qui est associée à l'objet (2) à inspecter,
- Compléter la structure de données avec le jeu de données transmis par l'unité de base (12),
mise à disposition, en particulier en temps réel, de la structure de données, en particulier sur le serveur (3), pour un utilisateur sur place,
- La mise à disposition de la structure de données s'effectuant sous la forme d'un modèle virtuel tridimensionnel (9) de l'objet (2) à inspecter, la structure de données ainsi que le modèle virtuel basé sur celle-ci étant alimentés en permanence par le serveur avec les données transmises par l'unité de base (12) concernant des structures internes et/ou un état interne des composants de l'unité de mesure (13 de l'objet), l'utilisateur interagit sur place avec le modèle virtuel (9), les structures internes sont représentées dans le modèle virtuel (9) de manière visible à travers des parois semi-transparentes, les positions de mesure sont marquées dans le modèle virtuel (9) et sont conçues comme des renvois, de sorte qu'en cas d'action correspondante de l'utilisateur, les informations souhaitées concernant un état interne et/ou une structure interne peuvent être appelées.

11. Procédé selon la revendication 10, **caractérisé en ce qu'**un champ de vision est détecté, lequel détecte au moins l'unité de mesure mobile (13) et/ou l'utilisateur sur place (10) lors de la détermination de la valeur de mesure et un environnement de la position de mesure (32), la détection étant effectuée en particulier avec l'unité de prise de vue (17) .

12. Procédé selon l'une des revendications 10 à 11, **caractérisé en ce que** la position de mesure est marquée sur l'objet (2), notamment avec une unité de marquage (15).

13. Procédé selon l'une des revendications 10 à 12, **caractérisé en ce qu'**un environnement immédiat de la position de mesure (32) est photographié et/ou filmé, en particulier au moyen d'une unité de macrophotographie (16).

14. Procédé selon l'une des revendications 10 à 13, **caractérisé en ce qu'**une mesure ou une prise de vue est effectuée automatiquement lorsqu'une position de mesure prédéfinie est atteinte.
